(19) Europäisches Patentamt
European Patent Office
Office européen des brevets

(11) **EP 4 201 648 B1**

(12) **EUROPÄISCHE PATENTSCHRIFT**

(45) Veröffentlichungstag und Bekanntmachung des Hinweises auf die Patenterteilung:
**20.11.2024  Patentblatt 2024/47**

(21) Anmeldenummer: **22216207.5**

(22) Anmeldetag: **22.12.2022**

(51) Internationale Patentklassifikation (IPC):
***B29C 64/118*** (2017.01)      ***B29C 64/386*** (2017.01)
***B33Y 10/00*** (2015.01)      ***B33Y 30/00*** (2015.01)
***B33Y 50/00*** (2015.01)

(52) Gemeinsame Patentklassifikation (CPC):
**B29C 64/386; B29C 64/118; B33Y 10/00; B33Y 30/00; B33Y 50/00**

(54) **THERMISCHE PROZESSFÜHRUNG**

THERMAL PROCESS CONTROL

CONTRÔLE DE PROCESSUS THERMIQUE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **22.12.2021  DE 102021134379**

(43) Veröffentlichungstag der Anmeldung:
**28.06.2023  Patentblatt 2023/26**

(73) Patentinhaber: **Arburg GmbH + Co KG**
**72290 Loßburg (DE)**

(72) Erfinder:
• **NEFF, Martin**
**78730 Lauterbach (DE)**

• **STEFFEN, Kevin**
**72280 Dornstetten (DE)**

(74) Vertreter: **RPK Patenanwälte Reinhardt und Kaufmann Partnerschaft mbB (Pforzheim)**
**Grünstraße 1**
**75172 Pforzheim (DE)**

(56) Entgegenhaltungen:
JP-A- 2020 183 549      US-A1- 2018 314 235
US-A1- 2020 307 174

**Beschreibung**

Die Erfindung betrifft ein Verfahren zur thermischen Prozessführung mit den Merkmalen des Oberbegriffes des Anspruches 1. Verfahrensgemäß ist wenigstens ein dreidimensionaler Gegenstand mittels additiver Fertigung durch Austragen von Volumenelementen bestimmter Größe pro Zeiteinheit mindestens eines fluiden verfestigbaren Materials mit einer bestimmten Temperatur mittels mindestens einer Austragsdüse mindestens einer Austragseinheit einer durch das Verfahren steuerbaren Vorrichtung zur Erzeugung des dreidimensionalen Gegenstands an diskreten Positionen in einem Bauraum nach einem vorher festgelegten Modell des dreidimensionalen Gegenstands erzeugbar. Das Modell ist Teil eines computerimplementierten Maschinencodes, der die diskreten Positionen der auszutragenden Volumenelemente und Randbedingungen für deren Austrag definiert. Dabei wird für jede diskrete Position im dreidimensionalen Raum die Temperatur des Volumenelements berechnet und dabei die Wärmeenergien berücksichtigt, die durch mindestens eine Wärmequelle und/oder Wärmesenke in den Bauraum eingebracht bzw. aus diesem abgeführt werden und durch Wärmeverluste im Bauraum abgegeben werden. Weiterhin betrifft die Erfindung eine Vorrichtung zur Ausführung des Verfahrens zum Austragen von Volumenelementen an diskreten Positionen in einem Bauraum, entsprechend eines Modells des dreidimensionalen Gegenstands und entsprechend den Ansprüchen 15 sowie ein Computerprogrammprodukt nach Anspruch 16.

Aus der DE 10 2016 120 998 A1 ist ein Verfahren zur simulationsbasierten Erkennung thermisch kritischer Bauteilbereiche bei der additiven Herstellung eines dreidimensionalen Bauteils aus mehreren Bauteilschichten durch mehrfaches inkrementelles, insbesondere schichtweises, Hinzufügen von pulver-, draht- oder bandförmigem, insbesondere metallischem, Bauteilausgangsmaterial und, insbesondere inkrementelles, formgebendes Verfestigen durch jeweiliges selektives Schmelzen und/oder Sintern des Bauteilausgangsmaterials mittels einer durch mindestens eine Energiequelle lokal eingebrachten Wärmemenge bekannt. Das Verfahren umfasst eine simulationsbasierte Berechnung der Werte der lokalen Wärmeableitungsfähigkeit in Bauteilschichten des hergestellten Bauteils und Erkennung von thermisch kritischen Bauteilbereichen anhand der simulationsbasiert berechneten Werte der lokalen Wärmeableitungsfähigkeiten oder anhand einer Funktion derselben. Weiterhin sind daraus entsprechende Verfahren zur bauteilspezifischen lokalen Anpassung, insbesondere Steuerung oder Regelung, einer lokalen Wärmegenerierung bei der additiven Herstellung eines dreidimensionalen Bauteils bekannt.

Die DE 10 2017 107 362 A1 beschreibt ein Verfahren zur additiven Fertigung eines dreidimensionalen Bauteils aus mehreren Bauteilschichten durch mehrfaches inkrementelles, insbesondere schichtweises, Hinzufügen von pulver-, draht- oder bandförmigem, insbesondere metallischem, Bauteilausgangsmaterial und, insbesondere inkrementelles, formgebendes Konsolidieren durch jeweils selektives Schmelzen und/oder Sintern des Bauteilausgangsmaterials mittels einer durch mindestens eine Energiequelle, insbesondere lokal, gemäß einer Scanstrategie eingebrachten Wärmemenge. Die Auslegung der Trajektorien des Wärmeeintrags erfolgt auf Basis einer, insbesondere simulationsbasiert, ermittelten lokalen Wärmeableitungsfähigkeit. Weiterhin darin beschrieben ist ein Verfahren zur Berechnung einer Scanstrategie zwecks entsprechender Ansteuerung einer Anlage zur additiven Fertigung eines dreidimensionalen Bauteils sowie eine diesbezügliche Anlage.

Aus der DE 10 2017 107 364 A1 ist ein Verfahren zur additiven Fertigung eines dreidimensionalen Bauteils aus mehreren Bauteilschichten durch mehrfaches inkrementelles, insbesondere schichtweises, Hinzufügen von pulver-, draht- oder bandförmigem, insbesondere metallischem, Bauteilausgangsmaterial und, insbesondere inkrementelles, formgebendes Konsolidieren des Bauteilausgangsmaterials durch jeweils selektives Schmelzen und/oder Sintern mittels einer durch mindestens eine Energiequelle, insbesondere lokal, gemäß einer Scanstrategie eingebrachten Wärmemenge bekannt. Das Verfahren umfasst eine Aufteilung jeder Bauteilschicht in Segmente, wobei die Aufteilung einer Bauteilschicht in Segmente und/oder die zeitliche Reihenfolge der Erzeugung einzelner Segmente und/oder die Auslegung der Scanvektoren innerhalb eines Segmentes und/oder die zeitliche Reihenfolge der Scanvektoren innerhalb eines Segmentes bei Erzeugung von jeweiligen segmentierten Bauteilschichten auf Basis einer, insbesondere simulationsbasiert, ermittelten lokalen Wärmeableitungsfähigkeit oder anhand einer Funktion derselben in einer jeweiligen Bauteilschicht erfolgt. Weiterhin sind daraus ein Verfahren zur Berechnung der Scanstrategie zwecks entsprechender Ansteuerung einer Anlage zur additiven Fertigung eines dreidimensionalen Bauteils sowie eine entsprechende Anlage bekannt.

In der DE 10 2018 127 678 A1 ist ein additives Herstellungsverfahren beschrieben, das ein Überwachen der Temperatur eines Abschnitts einer Aufbauebene während eines additiven Fertigungsvorgags unter Verwendung eines Temperatursensors, während eine Wärmequelle den Abschnitt der Aufbauebene durchläuft, ein Erfassen einer Peaktemperatur, die mit einem oder mehreren Durchgängen der Wärmequelle durch den Abschnitt der Aufbauebene verknüpft ist, ein Bestimmen einer Grenztemperatur durch Reduzieren der Peaktemperatur um einen vorgegebenen Betrag, ein Ermitteln eines Zeitintervalls, in dem die überwachte Temperatur die Grenztemperatur überschreitet, ein Identifizieren einer Änderung der Herstellungsbedingungen, die wahrscheinlich zu einem Fertigungsfehler führen werden, unter Verwendung des Zeitintervalls und ein Ändern eines Prozessparameters der Wärmequelle als Reaktion auf die Änderung der Herstellungsbedingungen umfasst.

Die oben genannten vier Dokumente beschäftigen sich alle vornehmlich mit der Berechnung einer simulationsbasiert ermittelten lokalen Wärmeableitungsfähigkeit bei der Erzeugung eines dreidimensionalen Gegenstands mittels additiver Herstellungsverfahren, wobei jedoch nur Teile eines der Realität nahekommenden Wärmeenergiemodells betrachtet und zur Steuerung eines optimierten Herstellungsprozesses, insbesondere in Hinsicht auf optimale lokale Temperaturen beim Austragen der verfestigbaren Materialien, verwendet werden.

Aus der US 10,442,118 B2 ist ein 3D-Drucksystem bekannt, bei dem die Teilequalität von 3D-gedruckten Teilen besser kontrolliert werden soll. Dazu wird die Temperatur eines Extruderfilaments unter Verwendung einer sekundären Wärmequelle ermittelt, wobei eine z. B. Infrarot-Wärmequelle verwendet werden kann, um das Filament des 3D-Druckers auf die optimale Temperatur zu erhitzen, die das Schweißen des Filaments an ein Substrat verbessert, auf das gedruckt wird. Eine solche optimale Temperatur kann teilweise auf der Temperatur des Substrats basieren. Eine intelligente Steuerung kann verwendet werden, um Temperaturmesswerte des Substrats und/oder des Filaments zu empfangen, um dann die Temperatur der Heizquelle anzupassen.

In der US 10,710,353 B2 ist ein Verfahren zur additiven Fertigung mittels Fused Deposition Modeling (FDM) beschrieben, das durch Laservorwärmen des Zielsubstrats vor der Extrusionsdüse verbessert wird. Höhere Grenzflächentemperaturen führen zu einer verbesserten Benetzung, Diffusion und Randomisierung, wodurch die Bindung zwischen den Filamenten und zwischen den Schichten verbessert und die Anisotropie im resultierenden Fertigteil verringert wird.

Die WO 2017/210490 A1 beschreibt ein Verfahren zum Drucken mindestens eines Teils eines dreidimensionalen Objekts, umfassend das Empfangen eines Modells des 3D-Objekts in einem Computerspeicher und das Austragen mindestens eines Filamentmaterials auf ein Substrat, wodurch eine erste Schicht abgeschieden wird, die einem Abschnitt des 3D-Objekts benachbart zum Substrat entspricht. Eine zweite Schicht, die zumindest einem weiteren Teil des 3D-Objekts entspricht, kann nachfolgend abgeschieden werden. Zumindest ein erster Energiestrahl von zumindest einer Energiequelle kann verwendet werden, um zumindest einen Teil der ersten Schicht und/oder der zweiten Schicht selektiv zu schmelzen, wodurch zumindest ein Teil des 3D-Objekts gebildet wird.

Aus der WO 2015/167896 A1 ist eine Vorrichtung, ein System und ein Verfahren zum 3D-Drucken bekannt, bei dem eine Zwischenschichtverbindung in dadurch hergestellten Objekten durch eine oder mehrere gezielte Wärmequellen verbessert wird, die gezielt einen Teil des vorhandenen Objektmaterials vorwärmen, bevor zusätzliches Material zum Objekt hinzugefügt wird. Der 3D-Druck wird auch durch Vor- oder Nachheizen eines Zielbereichs verbessert, optimiert oder kalibriert. Gezielt angewendete Wärmequellen können fest, mobil oder eine Kombination davon sein, um gezielt Bereiche mit Wärme zu beaufschlagen. Solch eine Wärmequelle kann in einen bestehenden 3D-Drucker integriert oder als Add-On zu diesem integriert werden. Eine Steuerung solch einer Wärmequelle kann 3D-Druckerinformationen verwenden, wie beispielsweise eine aktuelle Richtung oder eine zukünftige Druckrichtung, um eine oder mehrere Wärmequellen auszuwählen und andere gezielte Heizvorgänge durchzuführen, wie beispielsweise das Einstellen von Energieniveaus, das Zielen, das Bewegen usw.. Die Eigenschaften, z. B. die Festigkeit von 3D-gedruckten Objekten mit verbesserter Zwischenschichtbindung können dadurch um ein Vielfaches besser sein als beim gleichen Objekt, das ohne verbesserte Zwischenschichtbindung gedruckt wird.

Die oben zuletzt genannten vier Dokumente beschäftigen sich alle vornehmlich mit einer verbesserten Erzeugung eines dreidimensionalen Gegenstands mittels additiver Herstellungsverfahren unter Verwendung zusätzlicher Wärmequellen, wobei jedoch im Wesentlichen keine Simulation, insbesondere unter Verwendung eines der Realität nahekommenden Wärmeenergiemodells zur Steuerung eines optimierten Herstellungsprozesses, insbesondere in Hinsicht auf optimale lokale Temperaturen beim Austragen der verfestigbaren Materialien, verwendet wird.

Im Artikel "A HIGH FIDELITY THERMAL MODEL FOR A NOVEL DROPLET-BASED ADDITIVE MANUFACTURING PROCESS FOR POLYMERS" von Schroeffer, A., Maciuga T., Struebig, K. und Lueth, T., Proceedings of the ASME 2019, 14th International Manufacturing Science and Engineering Conference MSEC2019, June 10-14, 2019, Erie, PA, USA werden die Grundlagen eines weitestgehend präzisen thermischen Modells für ein Tropfen-basiertes additives Herstellungsverfahren unter Verwendung von Polymermaterial vorgestellt. Das darin verwendete Modell, das Bestandteil eines Maschinencodes zur Steuerung einer Vorrichtung zur Herstellung von dreidimensionalen Gegenständen ist, berücksichtigt die Wärmeenergien, die durch mindestens eine Wärmequelle in den Bauraum eingebracht und durch Wärmeverluste im Bauraum abgegeben werden, zur Berechnung der lokalen Temperatur eines ausgetragenen Materialtropfens aus Kunststoff, insbesondere thermoplastischen Kunststoff. Dabei werden bei der Simulation neben den eingebrachten Wärmeenergien von Austragsdüsen und zusätzlichen Wärmequellen auch die in den Bauraum abgegebenen Wärmeenergien, wie z. B. der Wärmetransport zu einem den herzustellenden Gegenstand tragenden Träger oder zu benachbarten bereits ausgetragenen Kunststofftropfen, die thermische Abstrahlung in den Bauraum und die freie Konvektion im Bauraum berücksichtigt. Damit wird theoretisch die Temperaturentwicklung im Bauraum mittels einer Finite Elemente Methode betrachtet, Schlussfolgerungen hieraus für den weiteren Baufortschritt werden jedoch nicht getroffen. Eine iterative und wärmeenergetisch additive Komponente der ausgetragenen Tropfen wird damit nicht berücksichtigt, welche die Wärmeenergiebilanz im Bauraum in Bezug auf die qualitative Verschmelzung der einzelnen Tropfen miteinander beeinflusst.

Die US 2018/314235 A1 offenbart ein System und ein Verfahren zur Optimierung von Werkzeugwegen basierend auf thermischen/strukturellen Simulationen eines mit einem dreidimensionalen Drucker (3D-Drucker) hergestellten Teils sowie ein nicht flüchtiges computerlesbares Medium, das mit ausführbaren Anweisungen zur Durchführung des Verfahrens codiert ist. Das System bzw. Verfahren verwendet einen Direct-Energy-Deposition (DED)-3D-Druck-Prozess, bei dem mittels eines Lasers eine Oberfläche eines bereits ausgetragenen verflüssigbaren und verfestigbaren Materials aufgeschmolzen wird, wobei in das geschmolzene Material weiteres verflüssigbares und verfestigbares Material in Pulverform mittels einer Düse eingetragen wird, die mit dem Laser gekoppelt ist. Die Temperatur des verflüssigbaren und verfestigbaren Materials ist mittels Einstellung der Laserleistung, dem Verfahrweg der Düse mit dem Laser (Zeitdauer ohne Lasereinwirkung), der Zeitdauer der Laserweinwirkung und der Breite des Laserstrahls einstellbar.

Die EP 3 960 332 A1 offenbart ein additives Verfahren zum Erzeugen einer Fertigungsbedingung für die additive Fertigung einer metallischen Struktur, eine Software zur Unterstützung der additiven Fertigung, die die Generierung einer Fertigungsbedingung für die additive Fertigung einer Metallstruktur unterstützt, die auf einem Computer ausgeführt wird, und ein Bedingungsunterstützungssystem für additive Fertigung, das eine Fertigungsbedingung für die additive Fertigung einer Struktur durch eine Fertigungsvorrichtung unterstützt. Das Verfahren bzw. das System arbeitet ebenfalls mit einem Direct-Energy-Deposition (DED)-3D-Druck-Prozess, bei dem mittels eines Lasers eine Oberfläche eines bereits ausgetragenen verflüssigbaren und verfestigbaren Materials aufgeschmolzen wird, wobei in das geschmolzene Material das verflüssigbare und verfestigbare Material in Pulverform mittels einer Düse eingetragen wird, die mit dem Laser gekoppelt ist. Die Temperatur des verflüssigbaren und verfestigbaren Materials ist mittels Einstellung der Laserleistung, der Verfahrgeschwindigkeit der Düse mit dem Laser, der Zeitdauer der Laserweinwirkung und einer Vorheiztemperatur des bereits ausgetragenen Materials oder einer Bauplattform einstellbar, die über zusätzliche Wärmequellen einstellbar ist.

Den beiden letztgenannten Dokumenten ist gemeinsam, dass in den darin verwendeten Druckprozessen mittels einer Düse pulverförmiges, verflüssigbares und verfestigbares Material ausgetragen wird und an der Stelle des Austrags auf einer Bauplattform oder auf bereits vorher ausgetragenem verflüssigbarem und verfestigbarem Material mittels eines Lasers aufgeschmolzen wird. In der hier beschriebenen Erfindung wird abweichend davon verflüssigbares und verfestigbares Material in einer Austragsdüse aufgeschmolzen und in liquider Form ausgetragen.

In der US 2020/307174 A1 ist ein Verfahren zum Optimieren einer Werkzeugpfadtrajektorie zum Drucken eines Teils offenbart, das Folgendes umfasst: (a) Empfangen eines Computermodells des genannten Teils in einem Computerspeicher; (b) Initiieren eines virtuellen Druckens des Teils in Übereinstimmung mit einer oder mehreren Druckcharakteristiken eines dreidimensionalen Druckers, wobei das virtuelle Drucken entlang eines virtuellen Druckkopf-Werkzeugwegs in Übereinstimmung mit dem Computermodell des Teils durchgeführt wird; (c) während des virtuellen Druckens des Teils, (i) Erhalten einer oder mehrerer physikalischer Eigenschaften des Teils unter Verwendung eines physikalischen Modells, und (ii) Bestimmen, ob die eine oder mehreren physikalischen Eigenschaften des Teils, die in (i) gemessen wurden, mindestens eine vorbestimmte Leistungsmetrik des Teils erfüllen; und (d) Anpassen des virtuellen Druckkopf-Werkzeugwegs, wenn festgestellt wird, dass die eine oder die mehreren in (i) gemessenen physikalischen Eigenschaften des Teils die mindestens eine vorbestimmte Leistungsmetrik des Teils nicht erfüllen, um einen angepassten Druckkopf-Werkzeugweg zu erhalten. Damit erfolgt eine Anpassung des Druckkopf-Werkzeugwegs, wenn vorgesehene physikalische Randbedingungen, wie z. B. Temperaturen bereits ausgetragener Druckelemente, nicht eingehalten werden.

Der Erfindung liegt daher die Aufgabe zugrunde, ein Verfahren zur thermischen Prozessführung, die Verwendung des Verfahrens in einer Vorrichtung und eine Vorrichtung zur Ausführung des Verfahrens für den oben genannten Zweck sowie ein Computerprogrammprodukt bereit zu stellen, bei denen ein computerimplementiertes Modell wenigstens eines dreidimensionalen Gegenstands verwendet wird, welches geeignet ist, lokale Temperaturen anzupassen, um homogene Eigenschaften eines erzeugten dreidimensionalen Gegenstands mit einer optimalen Verschmelzung der Volumenelemente zu realisieren.

Diese Aufgabe wird mit einem Verfahren gemäß den Merkmalen des Anspruchs 1, einer Vorrichtung zur Ausführung des Verfahrens gemäß den Merkmalen des Anspruch 15 sowie durch ein Computerprogrammprodukt gemäß Anspruch 16 gelöst. Dabei werden vorteilhaft zu keinem Zeitpunkt vorher festgelegte, materialabhängige Temperaturobergrenzen überschritten, um ein Aufschmelzen bzw. Aufweichen und/oder Zerfließen von bereits abgelegtem Material zu vermeiden und die Formstabilität des dreidimensionalen Gegenstands zu gewährleisten.

Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung und durch Details aus den Figuren ergänzt werden, wobei weitere Ausführungsvarianten der Erfindung aufgezeigt werden.

Verfahrensgemäß erfolgt eine thermische Prozessführung bei der additiven Fertigung wenigstens eines dreidimensionalen Gegenstands durch Austragen von Volumenelementen bestimmter Größe pro Zeiteinheit mindestens eines fluiden verfestigbaren Materials mit einer bestimmten Temperatur an diskreten Positionen in einem Bauraum nach einem vorher festgelegten Modell des dreidimensionalen Gegenstands. Das Modell ist Teil eines computerimplementierten Maschinencodes, der die diskreten Positionen der auszutragenden Volumenelementen und Randbedingungen für deren Austrag definiert, wobei für jede diskrete Position im dreidimensionalen Raum die Temperatur des Volumenelements berechnet wird und dabei die Wärmeenergien, die durch mindestens eine Wärmequelle und mindestens eine Wärmesenke in den Bauraum eingebracht bzw. aus dem Bauraum abgeführt werden und durch Wärmeverluste im Bauraum abgegeben werden, berücksichtigt werden. Indem die Temperatur zum Zeitpunkt des Austrags und nach dem Austrag Eingang in die Berechnung finden, lässt sich die additive Fertigung durch Anpassung des Maschinencodes so beeinflussen, dass zu keinem Zeitpunkt materialabhängige Temperaturobergrenzen überschritten werden. Dadurch lässt sich ein Aufschmelzen bzw. Aufweichen und/oder Zerfließen von bereits abgelegtem Material vermeiden und die Formstabilität des dreidimensionalen Gegenstands gewährleisten.

In einer ersten vorteilhaften Ausführungsform des Verfahrens, welche die Genauigkeit der lokalen Temperaturberechnung erhöht, können für jede diskrete Position im dreidimensionalen Raum zum Berechnen der Temperatur des Volumenelements, die Wärmeenergien, die in den Bauraum von der mindestens einen Austragsdüse der mindestens einen Austragseinheit und/oder je mindestens einer im Bauraum an der mindestens einen Austragsdüse angeordneten Wärmequelle und Wärmesenke ein- und ausgetragen werden und die auf das Volumenelement einwirken, und die Wärmeenergien, die in den Bauraum von dem Volumenelement an mindestens direkt benachbarte Volumenelemente sowie als Wärmestrahlung und freie Konvektion an die Umgebung abgegeben werden, berücksichtigt werden.

In einer weiteren vorteilhaften Ausführungsform des Verfahrens, welche die Genauigkeit der lokalen Temperaturberechnung erhöht bei gleichzeitiger Reduzierung des Rechenaufwands, können die Wärmeenergien, die für die Berechnung der Temperatur von Volumenelementen für jede diskrete Position im dreidimensionalen Raum relevant sind und die durch mindestens eine Wärmequelle und mindestens eine Wärmesenke in den Bauraum ein- und ausgetragen werden und durch Wärmeverluste im Bauraum abgegeben werden, in eine Differentialgleichung innerhalb des Modells des dreidimensionalen Gegenstands und/oder des Maschinencodes eingehen, wobei zu deren Lösung Teile der Differentialgleichung linearisiert werden können.

In einer zusätzlichen vorteilhaften Ausführungsform des Verfahrens, welche die Temperaturverteilung im dreidimensionalen Gegenstand weiter optimiert, kann zusätzlich für mindestens eine der direkt benachbarten diskreten Positionen und/oder für wenigsten eine andere diskrete Position die Temperatur des Volumenelements neu berechnet und basierend darauf der Maschinencode und/oder die Randbedingungen zur Temperaturerhöhung und Temperaturverminderung für mindestens diese diskrete Position angepasst werden.

Sollte in einer bevorzugten Ausgestaltung die berechnete Temperatur eines beliebigen Punktes auf der bereits ausgetragenen Oberfläche zu einem Zeitpunkt oberhalb einer definierten Temperaturgrenze liegen, kann vorteilhaft eine bestimmte Anzahl an Berechnungsschritten vor diesem Zeitpunkt zurückgegangen werden, um Anpassungen des Maschinencodes und/oder der Randbedingungen zur Temperaturerhöhung und Temperaturverminderung mindestens in dem neu berechneten Zeitintervall vorzunehmen. Dadurch lässt sich gezielt zu jedem Zeitpunkt die Temperaturverteilung im dreidimensionalen Gegenstand anpassen.

In einer anderen vorteilhaften Ausführungsform des Verfahrens, welche die Genauigkeit der lokalen Temperaturberechnung erhöht, kann aus Befehlen des Maschinencodes eine relative Trajektorie der mindestens einen Austragsdüse und ggf. wenigstens einer zusätzlich an der mindestens einen Austragsdüse angeordneten Wärmequelle und Wärmesenke bezüglich der Oberfläche eines den herzustellenden dreidimensionalen Gegenstand tragenden Trägers, z. B. eines Bautischs, und/oder des Gegenstands bestimmt werden.

Vorzugsweise wird das Verfahren vorausschauend durchgeführt, also wenigstens vor Austragen des Materials für wenigstens ein Volumenelement oder auch für Teile des oder den vollständigen dreidimensionalen Gegenstand. Dies geschieht durch vorausschauendes Berechnen der Temperatur des Volumenelements für jede diskrete Position und Beeinflussen der mindestens einen Wärmequelle und der mindestens einen Wärmesenke, indem der Maschinencode und die Randbedingungen zur Temperaturerhöhung und Temperaturverminderung angepasst werden. Dadurch kann vorteilhaft, bevor die Volumenelemente entstehen, deren Einfluss auf die Herstellung des Gegenstands berücksichtigt und zur Optimierung des Gegenstands beeinflusst werden.

Eine weitere vorteilhafte Ausführungsform des Verfahrens, die Alternativen für die Anpassung der lokalen Temperaturen bereitstellt, kann das Anpassen der Randbedingungen mittels mindestens einer oder einer Kombination der folgenden Maßnahmen umfassen:

- das Verändern der Prozessgeschwindigkeit,
- das Steuern der abgestrahlten Leistung der mindestes einen Wärmequelle,
- das Steuern der mindestens einen Wärmesenke,
- das Einfügen von zusätzlichen Verfahrbefehlen oder auch Wartebefehlen,
- das Verändern der Reihenfolge der diskreten Positionen, an denen nacheinander Volumenelemente ausgetragen werden,
- das Verändern der Beschaffenheit von Fülllinien und/oder Konturlinien.

In einer vorteilhaften Ausführungsform des Verfahrens können variabel in Abhängigkeit von dem Absorptionsspektrum des verwendeten Materials als Wärmequellen zur Temperaturerhöhung des Volumenelements an der diskreten Position eine oder mehrere thermische Strahlungsquellen, wie z. B. Infrarot-Strahler und/oder eine oder mehrere nichtthermische Strahlungsquellen, wie z. B. Laser, LED und/oder Gasentladungslampen eingesetzt werden.

In einer nächsten vorteilhaften Ausführungsform des Verfahrens kann zur Temperaturverminderung des Volumenelements an der diskreten Position eine zusätzliche erzwungene Konvektion hervorgerufen werden, zu deren Erzeugung z. B. mindestens ein Lüfter und/oder mindestens eine steuerbare Wärmesenke wahlweise verwendet werden kann.

In einer anderen vorteilhaften Ausführungsform des Verfahrens können zur gezielten Anpassung der Eigenschaften des dreidimensionalen Gegenstands mindestens zwei Materialien mit unterschiedlichen Spezifika als fluide verfestigbare Materialien verwendet werden.

In einer vorteilhaften Ausführungsform des Verfahrens kann zur gezielten Anpassung der Eigenschaften des dreidimensionalen Gegenstands und zur Erhaltung dessen Formstabilität bei der Verwendung von mindestens zwei Materialien mit unterschiedlichen Spezifika, die nicht eine gleiche, notwendige Bauraumtemperatur vertragen, bei auf die niedrigere der beiden Temperaturen eingestellter Bauraumtemperatur, die Temperatur des Volumenelements, das die höhere Verschmelzungstemperatur benötigt, zu dessen Auftrag erhöht oder verringert werden, und/oder bei auf die höhere der beiden Temperaturen eingestellter Bauraumtemperatur, die Temperatur des Volumenelements, das die niedrigere Verschmelzungstemperatur benötigt, zu dessen Auftrag verringert oder erhöht werden Diese Schritte sind damit auch kombinierbar, d.h. es kann gezielt eine höhere Temperatur mit Erwärmung und/oder eine geringere Temperatur mit Kühlung auf die ggf. auch benachbarten Volumenelemente angewandt werden. Dies schließt auch die Möglichkeit ein, die Temperaturen am Austragort nach Ausbringen des Volumenelements nachträglich zu erhöhen oder zu verringern.

Gerade bei Multi-Material-Systemen können durch gezielte Einflussnahme auf die Randbedingungen und die Temperatur/en, sei es z.B. im Bauraum, am Träger oder im Material selbst, vorteilhaft Rahmenbedingungen geschaffen werden, die es gestatten auch Materialien mit unterschiedlichen Spezifika zuverlässig miteinander zu verbinden bzw. zu vereinigen.

In einer vorteilhaften Ausführungsform des Verfahrens kann bei der Verwendung schwerer verarbeitbarer Materialien, insbesondere bei der Verwendung von Hochtemperaturmaterialien, wie z. B. PEI, PSU, PPSU, PEEK, PEAK, PEK oder PPS, deren notwendige Bauraumtemperatur nicht realisiert werden kann, die Temperatur des Volumenelements zu dessen Auftrag erhöht werden.

In einer anderen vorteilhaften Ausführungsform des Verfahrens, die die Diffusion der Volumenelemente zusätzlich begünstigt und/oder z. B. bei teilkristallinen Kunststoffen die Morphologieentwicklung beeinflusst bzw. gezielt steuert, können ausgetragene Volumenelemente nach vollständigem Austrag der Fülllinie und/oder Konturlinie temperiert werden. Grundsätzlich kann die mit Volumenelementen zu versehende Oberfläche eines den herzustellenden dreidimensionalen Gegenstand tragenden Trägers oder des dreidimensionalen Gegenstands nicht nur beim Materialaustrag erwärmt/gekühlt wird, sondern auch ohne Materialaustrag.

So kann durch gezieltes Halten bzw. Erhöhen bzw. Absenken der Umgebungstemperatur die Morphologieentwicklung begünstigt werden. Auf die Umgebungstemperatur haben dabei insbesondere die Temperaturen im Bauraum sowie die des vorzugsweise temperierbaren Trägers Einfluss. Ein derart temperierbarer Bauträger kann vorteilhaft wie eine Erweiterung der Bauraumbeheizung wirken (gleiche Temperatureinstellungen), um z.B. eine homogene Temperatursteuerung des dreidimensionalen Gegenstands sicher zu stellen, indem z.B. von allen Bauteilseiten gleiche Temperaturbedingungen geschaffen werden. Dies trägt zur Vermeidung von Spannungen und damit zur Verzugsminimierung bei.

In einer weiteren Ausführungsform des Verfahrens, durch die die vorteilhaft mechanischen Eigenschaften des dreidimensionalen Gegenstands vorhergesagt werden können, kann mittels einer Simulation eine Morphologieentwicklung des dreidimensionalen Gegenstands aufgrund einer Temperaturentwicklung bestimmt werden.

Die Aufgabe wird zudem durch eine Vorrichtung zur Ausführung des Verfahrens gelöst. Ebenfalls wird die Aufgabe durch ein Computerprogrammprodukt gelöst. Für Vorteile hinsichtlich einer lokalen Anpassung der Temperaturen, um homogene Eigenschaften eines erzeugten Gegenstands mit einer optimalen Verschmelzung der Volumenelemente zu realisieren, ohne materialabhängige Temperaturgrenzen zu überschreiten, ist das Computerprogrammprodukt mit einem Programmcode auf einem Computer lesbaren Medium gespeichert zur Durchführung des oben beschriebenen Verfahrens.

Weitere Vorteile ergeben sich aus den Unteransprüchen und der nachfolgenden Beschreibung von Ausführungsbeispielen.

Die Erfindung wird nun anhand von in den beigefügten Figuren dargestellten Ausführungsbeispielen näher erläutert. Es zeigen:

Fig. 1a, 1b  schematische Darstellungen eines ersten Volumenelements bzw. eines zweiten Volumenelements mit einer Molekülkette,

Fig. 1c  eine schematische Darstellung einer Verbindung der beiden Volumenelemente aus Fig. 1a und Fig. 1b mit miteinander verbundenen Molekülketten,

Fig. 1d     eine schematische Darstellung einer unvollständigen Verbindung der Volumenelemente aus Fig. 1a und Fig. 1b mit nicht verbundenen Molekülketten,

Fig. 2     eine schematische Darstellung eines der Erfindung zugrunde liegenden Wärmeenergiemodells,

Fig. 3     ein Flussdiagramm zur Verdeutlichung der Simulation,

Fig. 4a, 4b     schematische Darstellungen der Fülllinien bzw. Konturen eines dreidimensionalen Gegenstands,

Fig. 5     eine schematische Darstellung aneinandergereihter Volumenelemente, der Konturen und Füllung des dreidimensionalen Gegenstands aus Fig. 4a und Fig. 4b,

Fig. 6     eine erfindungsgemäße Vorrichtung zur Ausführung des Verfahrens,

Fig. 7     eine vergrößerte Ansicht von Austragseinheit und Bauraum.

Beschreibung bevorzugter Ausführungsbeispiele

Bevor die Erfindung im Detail beschrieben wird, ist darauf hinzuweisen, dass sie nicht auf die jeweiligen Bauteile der Vorrichtung sowie die jeweiligen Verfahrensschritte beschränkt ist, da diese Bauteile und Verfahren variieren können. Die hier verwendeten Begriffe sind lediglich dafür bestimmt, besondere Ausführungsformen zu beschreiben und werden nicht einschränkend verwendet. Wenn zudem in der Beschreibung oder in den Ansprüchen die Einzahl oder unbestimmte Artikel verwendet werden, bezieht sich dies auch auf die Mehrzahl dieser Elemente, solange nicht der Gesamtzusammenhang eindeutig etwas Anderes deutlich macht.

Die mechanischen Eigenschaften bei extrudierenden und aufschmelzenden 3D Druckprozessen (FDM, AKF, etc.) werden durch die Materialeigenschaften selbst, sowie die Bindungsstärke von den abgelegten, in der Größe variablen Volumenelemente (Filamente, Tropfen, etc.) bestimmt. Die Bindungsstärke wird wiederum durch den Bindungsprozess zwischen benachbarten Volumenelementen bestimmt, der während des 3D-Druckens stattfindet, und dieser ist abhängig von den thermischen Randbedingungen.

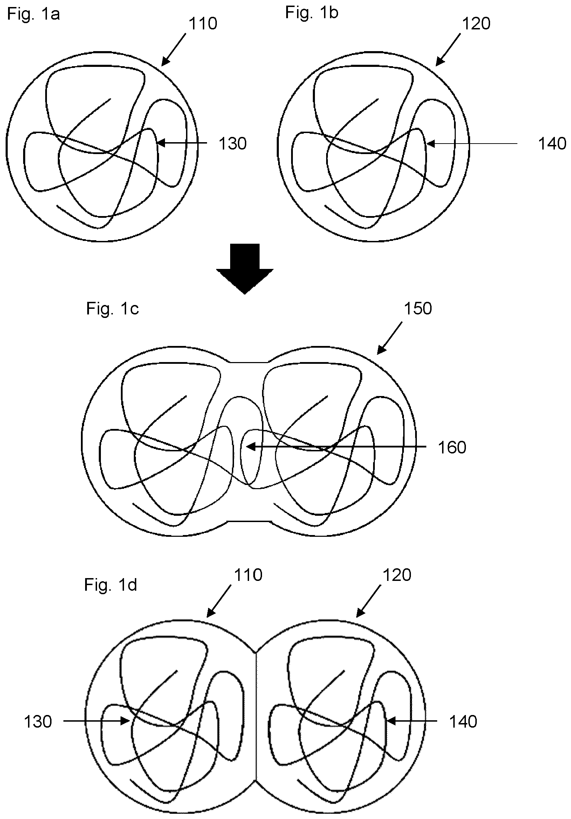

Das Zusammenschmelzen von einzelnen Volumenelementen 110, 120 zu einer stoffschlüssigen Verbindung 150 ist abhängig von den Interdiffusionen und Verschlaufungen von Polymerketten bzw. Molekülketten 130, 140 in die Grenzschicht des Bindungspartners. Voraussetzung für die Interdiffusion ist eine gewisse Beweglichkeit der Molekülketten 130, 140, begünstigt durch ein ausreichend hohes thermisches Niveau. Die Figuren 1a, 1b und 1c zeigen diesen Prozess für die Verbindung zweier hier tropfenförmiger Volumenelemente 110, 120 zu einem größeren verbundenen Volumenelement 150, wobei auch die Verbindung 160 der der zuvor getrennten einzelnen Molekülketten 130, 140 in Form einer Verschlaufung miteinander erkennbar ist. Als Volumenelemente kommen aber nicht nur Tropfen, sondern auch strangförmige Filamente in Betracht, da es sich ebenfalls um ausgetragene Volumenelemente pro Zeiteinheit handelt.

Bei amorphen Polymeren tritt diese Bewegung oberhalb der Glasübergangstemperatur in der thermoplastischen Zustandsform auf. Demensprechend muss die thermische Energie der neu aufgebrachten Volumenelemente 110, 120 hoch genug sein, um sämtliche Bindungspartner in der Grenzfläche über die Glasübergangstemperatur zu erwärmen.

Bei den aufschmelzenden 3D Druckprozessen kann zum einen die Kontakttemperatur zwischen den zuvor bereits ausgebrachten, ggf. bereits erstarrten Volumenelemente 120 bzw. 150 am herzustellenden dreidimensionalen Gegenstand und/oder die Schmelzetemperatur des neu abzulegenden Volumenelements 110 das Zusammenschmelzen der Volumenelemente 110 und 120 bzw. 150 beeinflussen.

Eine Temperaturerhöhung der Schmelze bewirkt zudem eine Senkung der Viskosität, allerdings sind niedrigere Viskositäten zum Teil nicht möglich ohne das Hervorrufen einer thermischen Schädigung des Materials. Die Umgebungstemperatur wird meist mittels erzwungener Konvektion von erwärmter Luft realisiert, die Erhöhung dieser ist begrenzt durch die Formstabilität des jeweiligen Materials.

Bei der Einstellung der Umgebungstemperatur bei Multi-Materialdruck muss zudem ein Kompromiss eingegangen werden, besonders wenn die Materialschmelzpunkte weit auseinanderliegen. Beim Unterschreiten der jeweiligen Schmelzepunkttemperatur wird keine ausreichende Materialverschmelzung gewährleistet und beim Überschreiten der Schmelzepunkttemperatur liegt keine ausreichende Formstabilität des jeweiligen Materials vor, wodurch die geometrischen Eigenschaften des dreidimensionalen Gegenstands negativ beeinflusst werden könnten.

Beispiele sind die Verarbeitung der Materialkombination ABS und TPU. Für ABS wird eine Bauraumtemperatur von 100°C empfohlen und für TPU 80°C. Während die eine Temperatur für ein Material zu hoch ist und eine Formstabilität während des Prozesses nicht mehr gewährleistet werden kann, ist die andere Temperatur für das andere Material zu gering, sodass keine ausreichende Materialverschmelzung stattfinden kann. Die Verarbeitung von Materialkombinationen, deren Schmelzpunkte weit auseinanderliegen, ist somit kaum möglich.

Zudem liegt bei Hochtemperaturmaterialien (wie z.B. PEI, PSU und PPSU sowie PEEK bzw. PEAK, PEK und PPS) die notwendige Bauraumtemperatur bei über 200°C und ist meist technisch nur begrenzt realisierbar.

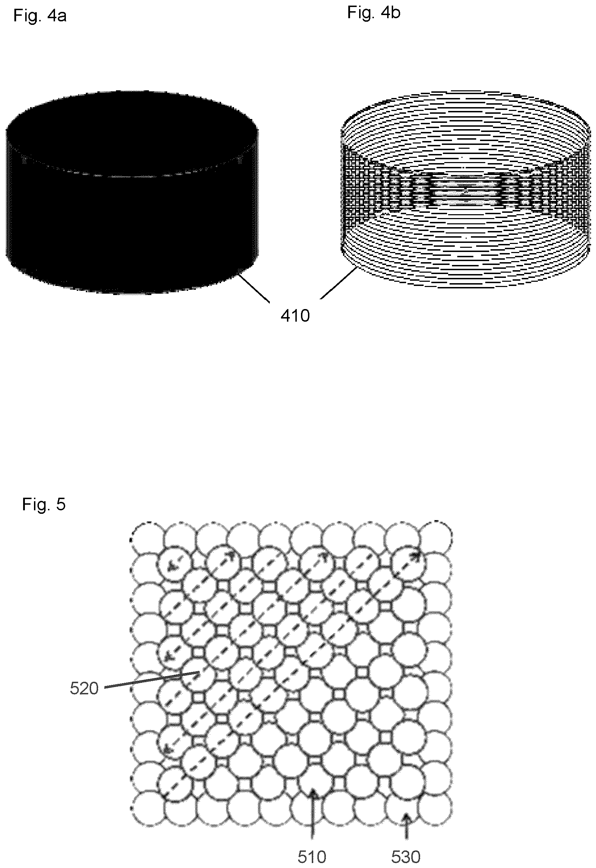

Des Weiteren hängt die Temperaturentwicklung der Volumenelemente 110, 120 während des 3D-Druckprozesses von weiteren thermischen Bedingungen, wie den Materialeigenschaften und den Prozessparametern, wie Druck, Austragsgeschwindigkeit, Durchflussmenge durch die Austragsdüse, usw., aber auch der geometrischen Gegebenheit der zu fertigenden dreidimensionalen Gegenstände 410 (Fig. 4) ab. Auch beeinflusst die Größe der Volumenelemente 110, 120 über das Verhältnis von Oberfläche zu Volumen den Verlauf der Temperatur: Kleinere Volumenelemente 110, 120 kühlen (bei gleicher Form) schneller ab.

Werden einzelne Volumenelemente 110, 120 zeitlich nahe nebeneinander abgelegt, liegt ein hohes Temperaturniveau vor und eine Verschmelzung wird begünstigt. Bei großen Gegenstandsquerschnitten sind viele der bereits abgelegten Volumenelemente 120, 150 schon (fast) auf Bauraumtemperatur abgekühlt und befinden sich im Bereich der thermoelastischen Zustandsform, d.h. sie sind ggf. bereits erstarrt. Wird direkt daneben ein neues Volumenelement 110 abgelegt, werden auf Bauraumtemperatur abgekühlte Volumenelemente 120, 150 aufgrund des höheren Temperaturniveaus zwar erwärmt bzw. angeschmolzen, aber die Volumenelemente 110 und 120 bzw. 150 können nicht mehr nahtlos zusammenschmelzen, da das mittlere Temperaturniveau nicht ausreichend ist. Fig. 1d zeigt dies, wobei die beiden Molekülketten 130, 140 der beiden ursprünglichen Volumenelemente 110, 120 nicht miteinander verbunden bzw. verschlauft sind.

Das im Folgenden vorgestellte Verfahren und die Vorrichtung zur Ausführung des Verfahrens dienen der Lösung der eingangs beschriebenen Aufgabe unter Erreichung der oben beschriebenen vollständigen Verbindung 150 der einzelnen Volumenelemente 110 und 120 bzw. 150 mit einer Verbindung bzw. Verschlaufung 160 der ursprüngliche getrennten Molekülketten 130, 140.

Dazu ist es notwendig, ein möglichst umfassendes Modell des dreidimensionalen Gegenstands zu verwenden, mit dessen Hilfe die Randbedingungen des Materialaustrags und der Materialverbindung der ursprünglich Volumenelemente 110, 120 definiert werden können. Das Modell kann dabei auf einem empirischen, analytischen oder numerischen Ansatz beruhen.

Der zeitliche Temperaturverlauf der Gegenstandsoberfläche am Ort des Materialaustrags kann beispielsweise mithilfe einer Differentialgleichung modelliert werden. Die Lösung hängt dabei sowohl von den Verfahrbefehlen für den jeweiligen herzustellenden dreidimensionalen Gegenstand sowie von den Umgebungsbedingungen während des Bauprozesses ab.

Über die Wärmekapazität Cv wird die Temperaturänderung dT in einem Volumenelement mit der Änderung $dQ_V$ der Wärme verknüpft:

$$dT = \frac{1}{c_V}\,dQ_V. \tag{1.1}$$

Die für die Anhaftung eines Volumenelements relevante Größe ist die Temperatur auf der Oberfläche zum Zeitpunkt des Austrags. Deshalb werden die Größen C und Q als Wärmekapazität bzw. Wärme pro Fläche A eingeführt. Die Größen C und Q sind immer mit einer Höhe $\Delta z$ verknüpft, welche zusammen mit A ein Volumen definiert auf das sich die Wärmeänderung bezieht. Durch Ableiten der obigen Gleichung nach der Zeit t erhält man:

$$\frac{dT}{dt} = \frac{1}{C}\,\frac{dQ}{dt}. \tag{1.2}$$

Hierbei beschreibt $\frac{dQ}{dt} = \dot{Q}$ den Wärmefluss durch die Oberfläche des betrachteten Volumenelements 110. Dieser setzt sich im hier betrachteten Fall zusammen aus den Wärmeverlusten durch Wärmeleitung $\dot{Q}_W$, Konvektion $\dot{Q}_K$ und Strahlung $\dot{Q}_s$. $\dot{Q}_{HS}$ beschreibt die eingebrachte Wärme durch Wärmequellen, wie bspw. die Austragsdüse 210 und/oder von mindestens einer zusätzlichen Wärmequelle und/oder der Wärmemenge des abgelegten Materials. Somit ergibt sich für den momentanen Temperaturwert eines aktuell auszutragenden Volumenelements 110:

$$\frac{dT}{dt} = \frac{1}{C}\,(\dot{Q}_W + \dot{Q}_K + \dot{Q}_S + \dot{Q}_{HS}). \tag{1.3}$$

Als Ansatz zur Reduzierung des Rechenaufwandes können für die Wärmeverluste folgende Ausdrücke verwendet werden:

$$\dot{Q}_W = \frac{\lambda}{l_z}\big(T_{Bauteil} - T(t)\big), \tag{1.4}$$

$$\dot{Q}_K = \alpha(T_{Luft} - T(t)), \tag{1.5}$$

$$\dot{Q}_S = \beta\left(T^4_{Umgebung} - T(t)^4\right), \tag{1.6}$$

wobei $T_{Bauteil}$ die Temperatur des herzustellenden dreidimensionalen Gegenstands in Abstand $l_z$ von der Oberfläche verwendet wird.

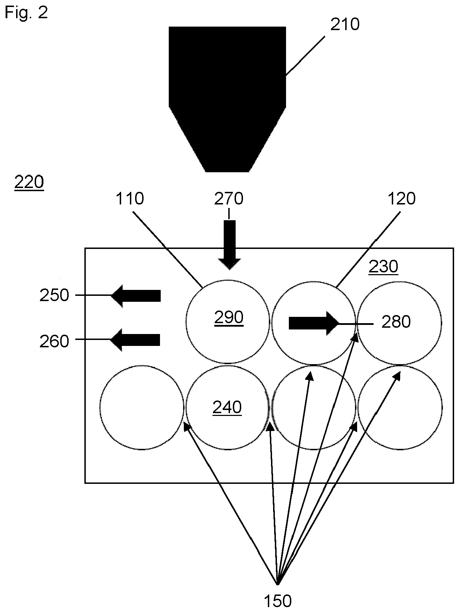

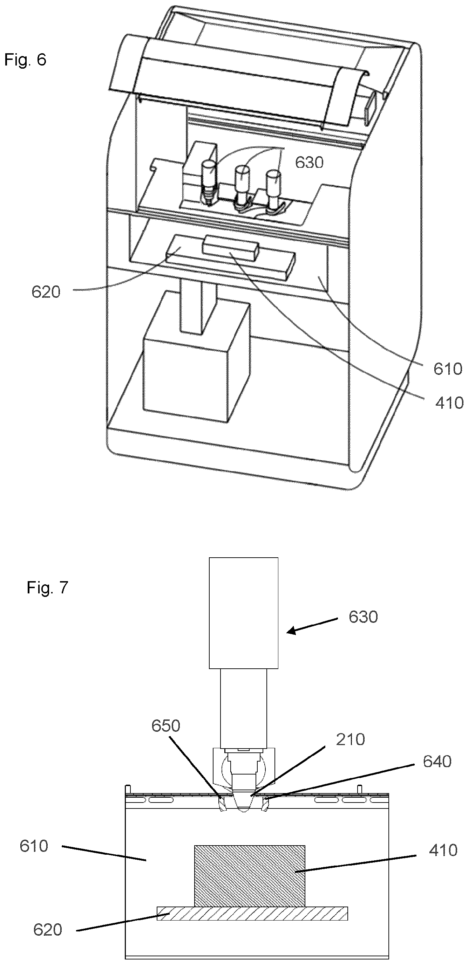

Fig. 2 verdeutlicht diesen Zusammenhang. Darin abgebildet ist die Austragsdüse 210, die für sich allein und/oder in Verbindung mit mindestens einer zusätzlichen Wärmequelle dargestellt ist, die an der Austragsdüse 210 bewegbar angeordnet ist. Es können dabei auch mehrere Austragsdüsen 210 einer oder mehrerer Austragseinheiten 630 (Fig. 6), z. B. zum gleichzeitigen Austragen eines Materials oder mehrerer Materialien mit identischen oder unterschiedlichen Spezifika vorhanden sein. Der Austrag kann auch sequentiell erfolgen. Grundsätzlich erfolgt ein Austragen von Volumenelementen bestimmter Größe pro Zeiteinheit. Von der mindestens einen Austragsdüse 210 der mindestens einen Austragseinheit 630 und/oder der mindestens einen zusätzlichen Wärmequelle wird die Wärmeenergie $\dot{Q}_{HS}$ 270 pro Zeit auf die Fläche A in den Bauraum 610 (Fig. 6) eingebracht. Vom ausgetragenen Volumenelement 110 wird mittels Konvektion $\dot{Q}_K$ 260 und Strahlung $\dot{Q}_S$ 250 sowie durch Wärmeleitung $\dot{Q}_W$ 280 Wärmeenergie an den Gegenstand 410 in die Umgebung des Bauraums 610 und die Luft abgegeben, wodurch sich deren Temperaturen $T_{Bauteil}$ 240, $T_{Umgebung}$ 230 und $T_{Luft}$ 220 verändern. Der Quotient dT/dt 290 beschreibt dabei die momentane Temperaturänderung des ausgetragenen Volumenelements 110. Die früher ausgetragenen Volumenelemente 120 bzw. deren Verbindungen 150 sind ebenfalls dargestellt.

Gleichung (1.4) ist die Formel für Wärmeleitung im stationären, eindimensionalen Fall. Die Wärmeleitung ist abhängig von der Wärmeleitfähigkeit $\lambda$ und der Temperaturdifferenz über die Länge $l_z$ und wird nur in Z-Richtung betrachtet, also nicht in der X-Y - Ebene zwischen den einzelnen Austragsorten.

Gleichung (1.5) beschreibt die natürliche Konvektion. Luftzirkulation im Bauraum 610 erzeugt durch Gebläse können dabei vernachlässigt werden. Gleichung (1.6) beschreibt den Wärmetransfer durch Strahlung nach dem Stefan-Boltzmann-Gesetz. Dabei wird davon ausgegangen, dass die Oberflächen der Umgebung homogen die Temperatur $T_{Umgebung}$ haben.

Um den Rechenaufwand zur Lösung von DGL (1.3) weiter zu reduzieren, können die Wärmeverluste zusammengefasst und linearisiert werden. Somit würde man erhalten:

$$\frac{dT}{dt} = \Gamma - \gamma * T(t) + \frac{1}{C}\dot{Q}_{HS}(t) \tag{1.7}$$

Gleichung (1.7) beschreibt zusammen mit den neuen Parametern $\Gamma > 0$ und $\gamma > 0$ eine Oberfläche mit Temperaturverlusten, welche linear in der Temperatur sind. Die neuen Parameter können dabei material- und ortsabhängig sein. Für die linearisierte Differentialgleichung (1.7) lautet dann die Lösung:

$$T(t) = \left[T(0) + \int_0^t ds \left(\Gamma + \frac{1}{C}\dot{Q}_{HS}(s)\right)e^{\gamma s}\right]e^{-\gamma t}, \tag{1.8}$$

Bei bekanntem zeitlichem Verlauf der eingestrahlten Wärme pro Zeit, $\dot{Q}_{HS}(t)$ am Ort $r_i$ erhält man über diese Gleichung den zeitlichen Verlauf der Temperatur an diesem Punkt.

Ist lokal eine Temperaturerhöhung zum Zeitpunkt des Materialaustrags notwendig, kann dies mittels Erhöhung von $\dot{Q}_{HS}$ erfolgen.

Während des gesamten Bauprozesses können die Temperaturen der Gegenstandsoberfläche durch Modellierung berechnet und durch Anpassungen des den dreidimensionalen Gegenstand 410 erzeugenden Maschinencodes, welcher auch die Ansteuerung mindestens einer Wärmequelle, mindestens eines Lüfters und/oder mindestens einer anderen steuerbaren Wärmesenke beinhalten kann, so verändert werden, dass diese zum Zeitpunkt des Materialaustrags am Ort desselben in einem vorher festgelegten, materialabhängigen Intervall liegen, um homogene Gegenstandseigenschaften mit einer ausreichenden Verschmelzung der Volumenelemente 110, 120 zu realisieren. Dabei wird vorteilhaft zu keinem Zeitpunkt eine vorher festgelegte, materialabhängige Temperaturobergrenze überschritten, um ein Aufschmelzen bzw. Aufweichen und/oder Zerfließen von bereits abgelegtem Material zu vermeiden und die Formstabilität des dreidimensionalen Gegenstands 410 zu gewährleisten.

Der Temperaturverlauf am Ort $r_i$ muss also folgende Bedingung erfüllen:

$$T(r_i, t_i) \geq T_{min}, \qquad\qquad (1.9)$$

zum Zeitpunkt des Austrags,

$$\max_{t}\ [T(r_i, t)] \leq T_{max}. \qquad\qquad (1.10)$$

für alle Zeiten.

Dabei ist $t_i$ der Zeitpunkt zu dem Material am Ort $r_i$ ausgetragen wird. Für jede Schicht können die Temperaturen $T(r_i,t)$ durch Integration der Gleichung (1.3) bestimmt werden. Als Parameter gehen die Ausgangstemperaturverteilung der Oberfläche zu Beginn des Schichtbaus und die geometrieabhängigen Wärmeverlustkoeffizienten, wie beispielsweise des Modells des dreidimensionalen Gegenstands in Gleichungen (1.4) - (1.6) oder des Modells in (1.7) ein. Aus den Befehlen des Maschinencodes kann die relative Trajektorie der Austragsdüse 210 (und von eventuell vorhandenen zusätzlichen Wärmequellen) bezüglich der Gegenstandsoberfläche bestimmt werden. Dabei kann die zusätzliche Wärmequelle an der Austragsdüse 210 angeordnet und relativ zu dieser bewegbar sein. Dies definiert sowohl die Geometrie des dreidimensionalen Gegenstands 410 in der betrachteten Schicht, als auch den zeitabhängigen Abstand zu den Wärmequellen. Aus Letzterem ergibt sich - zusammen mit der räumlichen Verteilung der Strahlungsamplitude - die zeitabhängig auf die Gegenstandsoberfläche eingestrahlte Leistung der Wärmequellen.

Vorzugsweise wird das Verfahren vorausschauend durchgeführt, also wenigstens vor Austragen des Materials für wenigstens ein Volumenelement 110 oder auch für Teile des oder den vollständigen dreidimensionalen Gegenstand 410. Dies geschieht durch vorausschauendes Berechnen der Temperatur des Volumenelements 110 für jede diskrete Position und Beeinflussen der mindestens einen Wärmequelle 640 und der mindestens einen Wärmesenke, indem der Maschinencode und die Randbedingungen zur Temperaturerhöhung und Temperaturverminderung angepasst werden. Dadurch kann vorteilhaft, bevor die Volumenelemente 110 entstehen, deren Einfluss auf die Herstellung des Gegenstands 410 berücksichtigt und zur Optimierung des Gegenstands beeinflusst werden.

Falls die berechnete, orts- und zeitabhängige Oberflächentemperatur $T(r,t)$ eine der beiden Bedingungen (1.9 oder 1.10) verletzt, kann mindestens eine oder eine Kombination der folgenden Maßnahmen durchgeführt werden:

- Veränderung der Prozessgeschwindigkeiten, z.B. die des Trägers 620 des herzustellenden Gegenstands und/oder der mindestens einen Austragseinheit 630 (Fig. 6),
- Steuerung der abgestrahlten Leistung der mindestens einen Wärmequelle 640 (Fig. 7),
- Steuern mindestens einer Wärmesenke 650 (Fig. 7),
- Einfügen von zusätzlichen Verfahrbefehlen oder auch Wartebefehlen,
- Veränderung der Reihenfolge der ausgetragenen Elemente (Konturen, Fülllinien),
- Veränderung der Beschaffenheit von Füll- und/oder Komturlinien, wie z.B. Aufspaltung in mehrere einzelne Fülllinien mit jeweils angepasster Geschwindigkeit und/oder Umwandlung in Einzelaustrag.

Dies geschieht mit dem Ziel, die durch die Wärmequelle(n) eingebrachte und durch Wärmeverluste abgegebene Energie an der Gegenstandsoberfläche so zu beeinflussen, dass nach Durchführung der Maßnahmen beide oben genannten Bedingungen (1.9 und 1.10) erfüllt sind.

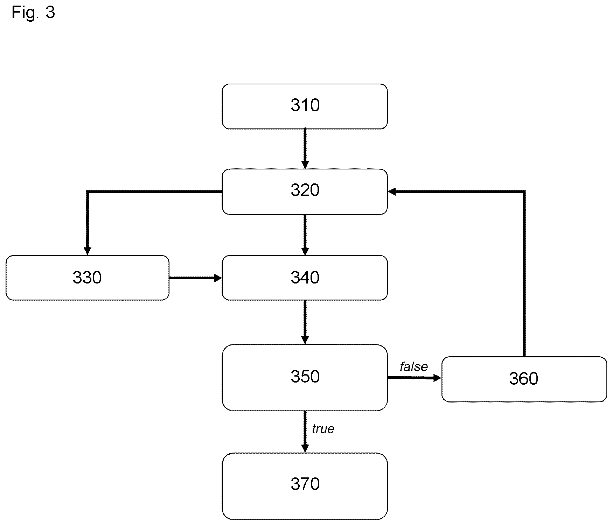

Dieses Vorgehen, das im Flussdiagramm der Fig. 3 gezeigt ist, verändert den Maschinencode und damit die Ergebnisse der Temperaturberechnung $T(r,t)$. Deshalb ist es vorteilhaft, auf Basis des angepassten Maschinencodes erneut die Temperaturen $T(r,t)$ zu bestimmen, um die Genauigkeit des Verfahrens zu erhöhen. Die oben beschriebenen Schritte werden dabei solange wiederholt, bis Bedingungen (1.9) und (1.10) eingehalten werden.

Block 310 beschreibt die Eingangsdaten in Form eines 3D Volumens z.B. eines STLs bzw. die Schichtstapel, die das 3D Volumen beschreiben (z.B. CLI). Dabei ist unter einem STL ein CAD Datenformat, das die äußere Geometrie des dreidimensionalen Gegenstands (sichtbare Kontur des 3D Volumens) beschreibt bzw. unter einem CLI ein CAD Datenformat, das einen Schichtstapel an Konturlinien des 3D Volumens beschreibt, zu verstehen. Im Block 320 wird entsprechend der inneren und äußeren Gestalt des herzustellenden Gegenstands 410 ein dem entsprechender Maschinencode erstellt, der neben den einzelnen geometrischen Positionen im dreidimensionalen Raum auch die sonstigen Randbedingungen zur Austragung des jeweiligen Volumenelements 110 beinhaltet. Diese Randbedingungen entsprechen den oben angegebenen Maßnahmen. Beim nun folgenden Lösen der oben angegebenen Differentialgleichung (1.3) im Block 340 wird auch das Ausgangstemperaturfeld (Bauraumtemperatur bzw. Temperatur des Gegenstands) im Block 330 beim Austrag jedes Volumenelements 110 mit einbezogen. Für jedes auszutragende Volumenelement 110 wird im Block 350 überprüft, ob die oben genannten Bedingungen (1.9, 1.10) eingehalten werden. Im positiven Fall kann dann im Block 370 der Maschinencode ausgegeben werden. Im negativen Fall muss der Maschinencode modifiziert werden, wobei er auch erweitert werden kann. Der weitere Ablauf ist dann wieder identisch entsprechend den nach Block 320 folgenden Blöcken.

Die Berechnungen des Verfahrens werden bevorzugt offline durchgeführt, d. h. vor der eigentlichen Erzeugung des 3D-Gegenstands. Sie können jedoch auch online durchgeführt werden. Ein Kriterium dafür kann z. B. die verfügbare Rechenleistung sein. Bevorzugt wird für die notwendigen Berechnungen ein numerischer Modellansatz verwendet, es kann jedoch auch ein empirischer oder analytischer Ansatz verwendet werden.

Fig. 4 und 5 verdeutlichen die Unterscheidung von Fülllinien 510 und Konturen 530 des dreidimensionalen Gegenstands, wobei in Fig. 5 die miteinander verbundenen Volumenelemente 130 der außenliegenden Konturen 530 und innenliegenden Fülllinien 510 gezeigt sind und eine mögliche Austragsreihenfolge und Austragsrichtung 520 der Volumenelemente 110, 120 schematisch anhand des gestrichelten Pfeils verdeutlicht werden.

Mit Unterstützung durch das beanspruchte Verfahren zur thermischen Prozessführung ist wenigstens ein dreidimensionaler Gegenstand 410 mittels additiver Fertigung durch es Austragen von Volumenelementen 110 bestimmter Größe pro Zeiteinheit, vorzugsweise durch sequentielles Austragen, mindestens eines fluiden verfestigbaren Materials mit einer bestimmten Temperatur mittels mindestens einer Austragsdüse 210 mindestens einer Austragseinheit 630 einer durch das Verfahren steuerbaren Vorrichtung gemäß Fig. 6, 7 zur Erzeugung des dreidimensionalen Gegenstands 410 an diskreten Positionen in einem Bauraum 610 nach einem vorher festgelegten Modell des dreidimensionalen Gegenstands 410 erzeugbar. Als Volumenelemente kommen insbesondere Tropfen und Stränge in Betracht, da in beiden Fällen Volumenelemente bestimmter Größe pro Zeiteinheit ausgetragen werden.

Das Modell ist Teil eines computerimplementierten Maschinencodes, der die diskreten Positionen der auszutragenden Volumenelemente 110 und Randbedingungen für deren Austrag definiert. Für jede diskrete Position im dreidimensionalen Raum wird die Temperatur des Volumenelements 110 berechnet und es werden die Wärmeenergien berücksichtigt, die durch mindestens eine Wärmequelle 640 und mindestens eine Wärmesenke 650 gemäß Fig. 7 in den Bauraum 610 eingebracht bzw. abgeführt und durch Wärmeverluste im Bauraum 610 abgegeben werden. Solche Wärmeverluste können z.B. auch Wärmeverluste an benachbarte Volumenelemente sein. Ebenso können benachbarte Volumenelemente und z.B. die Austragsdüse mögliche Wärmequellen sein. Dabei können eine oder mehrere Austragseinheiten 630 mit jeweils einer oder mehreren Austragsdüsen vorhanden sein.

Das Verfahren umfasst die folgenden Schritte:

- Feststellen, ob die berechnete Temperatur des aktuellen Volumenelements 110 zum aktuellen Zeitpunkt an der aktuellen diskreten Position innerhalb eines materialspezifischen Intervalls liegt,
- Feststellen, ob die berechneten Temperaturen der benachbarten Volumenelemente 120, 150 in einem betrachteten Zeitintervall von einem vorigen bis zum aktuellen Zeitpunkt unterhalb einer materialspezifischen Temperaturobergrenze liegen,
- falls die berechnete Temperatur am Ort des aktuellen Volumenelements 110 innerhalb des materialspezifischen Intervalls und die Temperaturen der benachbarten Volumenelemente 120, 150 im betrachten Zeitintervall unterhalb der materialspezifischen Temperaturobergrenze liegen:

  • Fortfahren mit dem Feststellen der Temperatur des nächsten Volumenelements 110 an der nächsten diskreten Position zu einem nächsten zugeordneten diskreten Zeitpunkt,
  • Fortfahren mit dem Feststellen der Temperaturen der benachbarten Volumenelemente 120, 150 bis zum nächsten zugeordneten diskreten Zeitpunkt,

- falls die berechnete Temperatur am Ort des aktuellen Volumenelements 110 außerhalb des materialspezifischen Intervalls liegt oder die Temperaturen der benachbarten Volumenelemente 120, 150 im betrachten Zeitintervall oberhalb der materialspezifischen Temperaturobergrenze liegen:

  • Anpassen des Maschinencodes und/oder der Randbedingungen zur Temperaturerhöhung und Temperaturverminderung mindestens an der aktuellen diskreten Position,
  • Fortfahren mit dem erneuten Feststellen der Temperatur des aktuellen Volumenelements 110 an der aktuellen diskreten Position,
  • Fortfahren mit dem erneuten Feststellen der Temperaturen der benachbarten Volumenelemente 120, 150,

  wobei die Schritte für mindestens einen Teil des Modells des dreidimensionalen Gegenstands 410 ausgeführt werden.

Die o. g. Schritte des Verfahrens können z. B. nur für das aktuell auszutragende Volumenelement 110 und ein benachbartes Volumenelement 120 oder für mehrere vorzugsweise diskrete benachbarte Volumenelemente 110, 120 in X-, Y- oder Z-Richtung ausgeführt werden, so dass es beispielsweise nur für eine Reihe, mehrere Reihen, eine Schicht, mehrere Schichten oder den kompletten Gegenstand 410 ausgeführt wird. Dies kann bedarfsweise auch vorausschauend für ein oder mehrere Volumenelemente 110, 120 oder auch für einen Teil des oder das vollständige Modell des dreidimensionalen Gegenstands erfolgen.

Dabei werden vorteilhaft zu keinem Zeitpunkt vorher festgelegte, materialabhängige Temperaturobergrenzen überschritten, um ein Aufschmelzen bzw. Aufweichen und/oder Zerfließen von bereits abgelegtem Material zu vermeiden und die Formstabilität des dreidimensionalen Gegenstands zu gewährleisten

Das materialspezifische Intervall kann z.B. dadurch definiert sein, dass innerhalb diese Intervalls ein vollständiges Verschmelzen des aktuellen Volumenelements 110 mit benachbarten Volumenelementen 120, 150 stattfinden kann. Die materialspezifische Temperaturobergrenze kann z.B. dadurch definiert sein, dass unter dieser Temperaturobergrenze die Formstabilität der Volumenelemente garantiert ist.

In einer ersten Ausführungsform des Verfahrens, welche die Genauigkeit der lokalen Temperaturberechnung erhöht, können für jede diskrete Position im dreidimensionalen Raum zum Berechnen der Temperatur des Volumenelements 110 die Wärmeenergien, die in den Bauraum 610 von der mindestens einen Austragsdüse 210 der mindestens einen Austragseinheit 630 und/oder mindestens einer im Bauraum 610 an der mindestens einen Austragsdüse 210 angeordneten Wärmequelle und Wärmesenke ein- und ausgetragen werden und die auf das Volumenelement 110 einwirken, und die Wärmeenergien, die in den Bauraum 610 von dem Volumenelement 110 an mindestens direkt benachbarte Volumenelemente 120 sowie als Wärmestrahlung und freie Konvektion an die Umgebung abgegeben werden, berücksichtigt werden.

In einer weiteren Ausführungsform des Verfahrens, welche die Genauigkeit der lokalen Temperaturberechnung erhöht bei gleichzeitiger Reduzierung des Rechenaufwands, können die Wärmeenergien, die für die Berechnung der Temperatur von Volumenelementen 110, 120 für jede diskrete Position im dreidimensionalen Raum relevant sind und die durch mindestens eine Wärmequelle und mindestens eine Wärmesenke in den Bauraum 610 ein- und ausgetragen und durch Wärmeverluste im Bauraum 610 abgegeben werden, in eine Differentialgleichung innerhalb des Modells des dreidimensionalen Gegenstands und des Maschinencodes eingehen, wobei zu deren Lösung Teile der Differentialgleichung linearisiert werden können.

In einer zusätzlichen Ausführungsform des Verfahrens, welche die Temperaturverteilung im dreidimensionalen Gegenstand 410 weiter optimiert, kann zusätzlich für mindestens eine der direkt benachbarten diskreten Positionen die Temperatur des Volumenelements 120 neu berechnet und basierend darauf der Maschinencode und/oder die ggf. damit verbundenen Randbedingungen zur Temperaturerhöhung und Temperaturverminderung für mindestens diese diskrete Position angepasst werden.

Zudem können unter vorteilhafter Optimierung der Temperaturverteilung im dreidimensionalen Gegenstand 410 zusätzlich für alle anderen diskreten Positionen die Temperaturen der Volumenelemente 120 neu berechnet und basierend darauf der Maschinencode und/oder die ggf. damit verbundenen Randbedingungen zur Temperaturerhöhung und Temperaturverminderung für diese diskreten Positionen angepasst werden.

In einer anderen Ausführungsform des Verfahrens, welche die Genauigkeit der lokalen Temperaturberechnung erhöht, kann aus Befehlen des Maschinencodes eine relative Trajektorie der mindestens einen Austragsdüse 210 und ggf. wenigstens einer zusätzlich an der mindestens einen Austragsdüse angeordneten Wärmequelle und mindestens einen Wärmesenke bezüglich der Oberfläche eines den herzustellenden dreidimensionalen Gegenstand 410 tragenden Trägers 620 und/oder des Gegenstands 410 bestimmt werden. Insbesondere kann auch der Träger 620 temperiert werden.

Eine weitere Ausführungsform des Verfahrens, die Alternativen für die Anpassung der lokalen Temperaturen bereitstellt, kann das Anpassen der Randbedingungen mittels mindestens einer oder einer Kombination der folgenden Maßnahmen umfassen:

- das Verändern der Prozessgeschwindigkeit des Austrags, wobei dieses z.B. über das Verändern der Fahrgeschwindigkeiten des Trägers 620 herzustellenden Gegenstands 410 und/oder der mindestens einen Austragseinheit 630 erreichbar ist;
- das Steuern der abgestrahlten Leistung der mindestens einen Wärmequelle;
- Steuern mindestens einer Wärmesenke
- das Einfügen von zusätzlichen Verfahrbefehlen oder auch Wartebefehlen;
- das Verändern der Reihenfolge der diskreten Positionen, an denen nacheinander Volumenelemente 110, 120 ausgetragen werden. Dabei können z. B. zunächst einzelne Konturen ausgetragen werden, unterbrochen vom Austrag von Fülllinien;
- das Verändern der Beschaffenheit von Fülllinien, wie z.B. Aufspaltung in mehrere einzelne Fülllinien mit jeweils angepasster Geschwindigkeit und/oder Umwandlung in Einzelaustrag, wobei Konturen oder Fülllinien beispielsweise in der Art ausgetragen werden, dass nur prozesstechnische Pausen zwischen den einzelnen Austrägen erfolgen, diese also kontinuierlich ausgetragen werden, oder zusätzliche, prozesstechnisch nicht notwendige Pausen eingefügt werden, wodurch die Temperatur gesenkt wird.

Vorzugsweise können variabel in Abhängigkeit vom Absorptionsspektrum des verwendeten Materials als Wärmequellen zur Temperaturerhöhung des Volumenelements an der diskreten Position eine oder mehrere thermische Strahlungsquellen, wie z. B. Infrarot-Strahler und/oder eine oder mehrere nichtthermische Strahlungsquellen, wie z. B. Laser, LED und/oder Gasentladungslampen eingesetzt werden. Da diese bewegbar und voneinander unabhängig an der jeweiligen Austragsdüse angeordnet sein können, können damit gezielt bestimmte Volumenelemente zusätzlich erwärmt werden, so z.B. das aktuelle Volumenelement 110 und/oder auch benachbarte Volumenelemente 120. Die Wahl der Strahlungsquelle kann sich dabei nach dem Absorptionsspektrum des verwendeten Kunststoffes richten.

In einer nächsten vorteilhaften Ausführungsform des Verfahrens kann zur Temperaturverminderung des Volumenelements 110 und/oder benachbarter Volumenelemente (120) an der diskreten Position eine zusätzliche erzwungene Konvektion hervorgerufen werden, zu deren Erzeugung z. B. mindestens ein Lüfter und/oder mindestens eine steuerbare Wärmesenke wahlweise verwendet werden kann.

Bevorzugt können zur gezielten Anpassung der Eigenschaften des dreidimensionalen Gegenstands mindestens zwei Materialien mit unterschiedlichen Spezifika als fluide verfestigbare Materialien verwendet werden.

Dazu kann zur gezielten Anpassung der Eigenschaften des dreidimensionalen Gegenstands 410 und zur Erhaltung dessen Formstabilität bei der Verwendung von mindestens zwei Materialien mit unterschiedlichen Spezifika, die nicht eine gleiche, notwendige Bauraumtemperatur vertragen, bei auf die niedrigere der beiden Temperaturen eingestellter Bauraumtemperatur, die Temperatur des Volumenelements 110, das die höhere Verschmelzungstemperatur benötigt, zu dessen Auftrag erhöht oder verringert werden, und/oder bei auf die höhere der beiden Temperaturen eingestellter Bauraumtemperatur die Temperatur des Volumenelements 110, das die niedrigere Verschmelzungstemperatur benötigt, zu dessen Auftrag verringert oder erhöht werden. Diese Schritte sind damit auch kombinierbar, d.h. es kann gezielt eine höhere Temperatur mit Erwärmung und/oder eine geringere Temperatur mit Kühlung auf ggf. auch benachbarten Volumenelemente angewandt werden. Bedarfsweise kann auch nach dem Ausbringen die Temperatur am Austragsort noch nachträglich erhöht oder verringert werden.

Gerade bei Multi-Material-Systemen können durch gezielte Einflussnahme auf die Randbedingungen und die Temperatur/en, sei es z.B. im Bauraum, am Träger oder im Material selbst, vorteilhaft Rahmenbedingungen geschaffen werden, die es gestatten, auch Materialien mit unterschiedlichen Spezifika zuverlässig miteinander zu verbinden bzw. zu vereinigen.

Vorzugsweise kann bei der Verwendung schwerer verarbeitbarer Materialien, insbesondere bei der Verwendung von Hochtemperaturmaterialien, wie z. B. PEI, PSU, PPSU, PEEK, PEAK, PEK oder PPS, deren notwendige Bauraumtemperatur nicht realisiert werden kann, die Temperatur des Volumenelements 110 zu dessen Auftrag erhöht werden.

In einer anderen Ausführungsform des Verfahrens, welche die Diffusion der Volumenelemente 110, 120 zusätzlich begünstigt und/oder z. B. bei teilkristallinen Kunststoffen die Morphologieentwicklung beeinflusst bzw. gezielt steuert, können die zu einer Fülllinie und/oder Konturlinie ausgetragenen Volumenelemente 120 bzw. 150 nach vollständigem Austrag der Fülllinie und/oder Konturlinie erwärmt/gekühlt werden. Auf diese Weise können z.B. auch Spannungen im dreidimensionalen Gegenstand vermieden werden, da große Temperaturunterschiede im Gegenstand vermieden werden können.

Grundsätzlich ist es zudem möglich, die mit Volumenelementen zu versehende Oberfläche eines den herzustellenden dreidimensionalen Gegenstand 410 tragenden Trägers 620 oder des dreidimensionalen Gegenstands 410 nicht nur beim Materialaustrag zu erwärmen bzw. zu kühlen, sondern auch ohne Materialaustrag. Ein derart temperierbarer Bauträger 620 kann wie eine Erweiterung der Bauraumbeheizung wirken (gleiche Temperatureinstellungen), um z.B. eine homogene Temperatursteuerung des dreidimensionalen Gegenstands 410 sicher zu stellen, indem z.B. von allen Bauteilseiten gleiche Temperaturbedingungen geschaffen werden. Dies trägt zur Vermeidung von Spannungen und damit zur Verzugsminimierung bei.

In einer weiteren vorteilhaften Ausführungsform des Verfahrens, durch die die mechanischen Eigenschaften des dreidimensionalen Gegenstands 410 vorhergesagt werden können, kann mittels einer Simulation eine Morphologieentwicklung des Gegenstands 410 aufgrund einer Temperaturentwicklung bestimmt werden.

So kann durch gezieltes Halten bzw. Erhöhen bzw. Absenken der Umgebungstemperatur die Morphologieentwicklung begünstigt werden. Auf die Umgebungstemperatur haben dabei insbesondere die Temperaturen im Bauraum 610 sowie die des vorzugsweise temperierbaren Trägers 620 Einfluss.

Das Verfahren nach einem seiner Ausführungsformen kann zur Erzeugung eines dreidimensionalen Gegenstands 410 mittels additiver Fertigung durch Austragen von Volumenelementen 110, 120 bestimmter Größe pro Zeiteinheit mindestens eines fluiden verfestigbaren Materials mit einer bestimmten Temperatur an diskreten Positionen im dreidimensionalen Raum in einer durch das Verfahren steuerbaren Vorrichtung mit mindestens einer Austragsdüse 210 mindestens einer Austragseinheit 630 verwendet werden, wobei durch diese in einem Bauraum, entsprechend eines Modells des dreidimensionalen Gegenstands 410 Volumenelemente 110 ausgetragen werden.

Das Verfahren nach einem seiner Ausführungsformen kann weiterhin in einer Vorrichtung mit mindestens einer Austragsdüse 210 mindestens einer Austragseinheit 630 zur Erzeugung eines dreidimensionalen Gegenstands 410 mittels additiver Fertigung durch Austragen von Volumenelementen 110, 120 bestimmter Größe pro Zeiteinheit, vorzugsweise durch sequentielles Austragen, mindestens eines fluiden verfestigbaren Materials mit einer bestimmten Temperatur an diskreten Positionen im dreidimensionalen Raum ausgeführt werden, wobei diese in einem Bauraum, entsprechend des Modells des dreidimensionalen Gegenstands 410 Volumenelemente 110 austrägt. Die Vorrichtung weist mindestens eine Wärmequelle und mindestens eine Wärmesenke auf, die ihrerseits vorzugsweise im Bereich der Austragsdüse angeordnet werden können.

Ein weiteres Ausführungsbeispiel bildet ein Computerprogrammprodukt mit einem Programmcode, der auf einem Computer lesbaren Medium gespeichert ist, zur Durchführung wenigstens eines der zuvor beschriebenen Verfahren unter Erreichung der genannten Vorteile.

## Bezugszeichenliste

| | |
|---|---|
| 110 | aktuell ausgetragenes Volumenelement |
| 120 | zuvor ausgetragenes Volumenelement |
| 130 | erste Molekülkette |
| 140 | zweite Molekülkette |
| 150 | verbundenes Volumenelement |
| 160 | miteinander verschlaufte Molekülketten |
| 210 | Austragsdüse |
| 220 | $T_{Luft}$ |
| 230 | $T_{Umgebung}$ |
| 240 | $T_{Bauteil}$ |
| 250 | $\dot{Q}_S$ |
| 260 | $\dot{Q}_K$ |
| 270 | $\dot{Q}_{HS}$ |
| 280 | $\dot{Q}_W$ |
| 290 | dT/dt |
| 310 | STL / CLI |
| 320 | Maschinencode erstellen |
| 330 | Ausgangstemperaturfeld zu Schichtbeginn |
| 340 | Lösen der Differentialgleichung |
| 350 | Überprüfen der Randbedingungen |
| 360 | Maschinencode modifizieren und erweitern |
| 370 | Maschinencode ausgeben |
| 410 | dreidimensionaler Gegenstand |
| 510 | Füllung |
| 520 | Fülllinienbahn |
| 530 | Kontur |
| 610 | Bauraum |
| 620 | Träger des herzustellenden 3D-Gegenstands |
| 630 | Austragseinheit |
| 640 | Wärmequelle |
| 650 | Wärmesenke |

## Patentansprüche

1. Verfahren zur thermischen Prozessführung, mittels dessen Unterstützung wenigstens ein dreidimensionaler Gegenstand (410) mittels additiver Fertigung durch Austragen von Volumenelementen (110, 120) bestimmter Größe pro Zeiteinheit mindestens eines fluiden verfestigbaren Materials mit einer bestimmten Temperatur mittels mindestens einer Austragsdüse (210) mindestens einer Austragseinheit (630) einer durch das Verfahren steuerbaren Vorrichtung zur Erzeugung des wenigstens einen dreidimensionalen Gegenstands (410) an diskreten Positionen in einem Bauraum (610) nach einem vorher festgelegten Modell des dreidimensionalen Gegenstands (410) erzeugbar ist, wobei das Modell des dreidimensionalen Gegenstands (410) Teil eines computerimplementierten Maschinencodes ist, der die diskreten Positionen der auszutragenden Volumenelemente (110) und Randbedingungen für deren Austrag definiert, und wobei für jede diskrete Position im dreidimensionalen Raum die Temperatur des Volumenelements (110) berechnet wird und dabei die Wärmeenergien, die durch mindestens eine Wärmequelle (640) und mindestens eine Wärmesenke (650) in den Bauraum (610) eingebracht bzw. aus dem Bauraum abgeführt werden und durch Wärmeverluste im Bauraum (610) abgegeben werden, berücksichtigt werden,

**dadurch gekennzeichnet,**

**dass** das Verfahren die folgenden Schritte umfasst:

- Feststellen, ob die berechnete Temperatur des aktuellen Volumenelements (110) zum aktuellen Zeitpunkt an der aktuellen diskreten Position innerhalb eines materialspezifischen Intervalls liegt,
- Feststellen, ob die berechneten Temperaturen der benachbarten Volumenelemente (120, 150) in einem betrachteten Zeitintervall von einem vorigen bis zum aktuellen Zeitpunkt unterhalb einer materialspezifischen Temperaturobergrenze liegen,
- falls die berechnete Temperatur am Ort des aktuellen Volumenelements (110) innerhalb des materialspezifischen Intervalls und die Temperaturen der benachbarten Volumenelemente (120, 150) im betrachten Zeitintervall unterhalb der materialspezifischen Temperaturobergrenze liegen:

  • Fortfahren mit dem Feststellen der Temperatur des nächsten Volumenelements (110) an der nächsten diskreten Position zu einem nächsten zugeordneten diskreten Zeitpunkt,
  • Fortfahren mit dem Feststellen der Temperaturen der benachbarten Volumenelemente (120, 150) bis zum nächsten zugeordneten diskreten Zeitpunkt,

- falls die berechnete Temperatur am Ort des aktuellen Volumenelements (110) außerhalb des materialspezifischen Intervalls liegt oder die Temperaturen der benachbarten Volumenelemente (120, 150) im betrachten Zeitintervall oberhalb der materialspezifischen Temperaturobergrenze liegen:

  • Anpassen des Maschinencodes und der Randbedingungen zur Temperaturerhöhung und Temperaturverminderung mindestens an der aktuellen diskreten Position,
  • Fortfahren mit dem erneuten Feststellen der Temperatur des aktuellen Volumenelements (110) an der aktuellen diskreten Position,
  • Fortfahren mit dem erneuten Feststellen der Temperaturen der benachbarten Volumenelemente (120, 150),

wobei die Schritte für mindestens einen Teil des Modells des dreidimensionalen Gegenstands (410) ausgeführt werden.

2.  Verfahren nach Anspruch 1, **dadurch gekennzeichnet, dass** für jede diskrete Position im dreidimensionalen Raum zum Berechnen der Temperatur des Volumenelements (110) die Wärmeenergien, die in den Bauraum von der mindestens einen Austragsdüse (210) der mindestens einen Austragseinheit (630) und/oder mindestens einer im Bauraum (610) an der mindestens einen Austragsdüse (210) angeordneten Wärmequelle (640) und Wärmesenke (650) ein- und ausgetragen werden und die auf das Volumenelement (110) einwirken, und die Wärmeenergien, die in den Bauraum (610) von dem Volumenelement (110) an mindestens direkt benachbarte Volumenelemente (120) sowie als Wärmestrahlung und freie Konvektion an die Umgebung abgegeben werden, berücksichtigt werden.

3.  Verfahren nach einem der Ansprüche 1 oder 2, **dadurch gekennzeichnet, dass** die Wärmeenergien, die für die Berechnung der Temperatur von Volumenelementen (110, 120) für jede diskrete Position im dreidimensionalen Raum relevant sind und die durch mindestens eine Wärmequelle (640) und mindestens eine Wärmesenke (650) in den Bauraum (610) ein- und ausgetragen werden und durch Wärmeverluste im Bauraum (510) abgegeben werden, in eine Differentialgleichung innerhalb des Maschinencodes eingehen, wobei zu deren Lösung Teile der Differentialgleichung linearisiert werden können.

4.  Verfahren nach einem der vorhergehenden Ansprüche, **dadurch gekennzeichnet, dass** zusätzlich für mindestens eine direkt benachbarte diskrete Position und/oder für wenigsten eine andere diskrete Position die Temperatur des Volumenelements (120) neu berechnet wird und dass basierend darauf der Maschinencode und/oder die Randbedingungen zur Temperaturerhöhung und Temperaturverminderung für mindestens diese diskrete Position angepasst werden.

5.  Verfahren nach einem der vorhergehenden Ansprüche, **dadurch gekennzeichnet, dass**, falls die berechnete Temperatur eines beliebigen Punktes auf der bereits ausgetragenen Oberfläche zu einem Zeitpunkt oberhalb einer definierten Temperaturgrenze liegt, eine bestimmte Anzahl an Berechnungsschritten vor diesem Zeitpunkt zurückgegangen wird und Anpassungen des Maschinencodes und/oder der Randbedingungen zur Temperaturerhöhung und Temperaturverminderung mindestens in dem neu berechneten Zeitintervall vorgenommen werden.

6. Verfahren nach einem der vorhergehenden Ansprüche, **dadurch gekennzeichnet, dass** aus Befehlen des Maschinencodes eine relative Trajektorie der mindestens einen Austragsdüse (210) und ggf. wenigstens einer zusätzlich an der mindestens einen Austragsdüse (210) angeordneten Wärmequelle (640) und Wärmesenke (650) bezüglich der Oberfläche eines den herzustellenden dreidimensionalen Gegenstand (410) tragenden, vorzugsweise temperierbaren Trägers (620) und/oder des dreidimensionalen Gegenstands (410) bestimmt wird.

7. Verfahren nach einem der vorhergehenden Ansprüche, **gekennzeichnet durch** vorausschauendes Berechnen der Temperatur des Volumenelements (110) für jede diskrete Position des mindestens einen Teil des Modells und Beeinflussen der mindestens einen Wärmequelle (640) und der mindestens einen Wärmesenke (650) durch Anpassen des Maschinencodes und der Randbedingungen zur Temperaturerhöhung und Temperaturverminderung.

8. Verfahren nach einem der vorhergehenden Ansprüche, **dadurch gekennzeichnet, dass** das Anpassen der Randbedingungen mindestens eine oder eine Kombination der folgenden Maßnahmen umfasst:

   - Verändern der Prozessgeschwindigkeit,
   - Steuern der abgestrahlten Leistung der mindestens einen Wärmequelle (640),
   - Steuern der mindestens einen Wärmesenke (650),
   - Temperieren des Trägers (620),
   - Einfügen von zusätzlichen Verfahrbefehlen oder auch Wartebefehlen,
   - Verändern der Reihenfolge der diskreten Positionen, an denen nacheinander Volumenelemente (110, 120) ausgetragen werden,
   - Verändern der Beschaffenheit von Fülllinien und/oder Konturen.

9. Verfahren nach einem der vorhergehenden Ansprüche, **dadurch gekennzeichnet, dass** zur Temperaturverminderung des Volumenelements (110) und/oder benachbarter Volumenelemente (120) an der diskreten Position eine zusätzliche erzwungene Konvektion hervorgerufen wird, zu deren Erzeugung z. B. mindestens ein Lüfter und/oder mindestens eine steuerbare Wärmesenke (640) verwendet wird.

10. Verfahren nach einem der vorhergehenden Ansprüche, **dadurch gekennzeichnet, dass** mindestens zwei Materialien mit unterschiedlichen Spezifika als fluide verfestigbare Materialien verwendet werden, wobei bei der Verwendung der mindestens zwei Materialien, falls sie nicht eine gleiche, notwendige Bauraumtemperatur vertragen,

    bei auf die niedrigere der beiden Temperaturen eingestellter Bauraumtemperatur, die Temperatur des Volumenelements (110), das die höhere Verschmelzungstemperatur benötigt, zu dessen Auftrag erhöht oder verringert wird, und/oder
    bei auf die höhere der beiden Temperaturen eingestellter Bauraumtemperatur, die Temperatur des Volumenelements (110), das die niedrigere Verschmelzungstemperatur benötigt, zu dessen Auftrag verringert oder erhöht wird.

11. Verfahren nach Anspruch 9 oder 10, **dadurch gekennzeichnet, dass** bei der Verwendung von Hochtemperaturmaterialien, wie z. B. PEI, PSU, PPSU, PEEK, PEAK, PEK oder PPS, deren notwendige Bauraumtemperatur nicht realisiert werden kann, die Temperatur des Volumenelements (110) zu dessen Auftrag erhöht wird.

12. Verfahren nach einem der vorhergehenden Ansprüche, **dadurch gekennzeichnet, dass** die mit Volumenelementen (110) zu versehende Oberfläche eines den herzustellenden dreidimensionalen Gegenstand (410) tragenden Trägers (620) oder des dreidimensionalen Gegenstands (410) nicht nur beim Materialaustrag erwärmt oder gekühlt wird, sondern auch ohne Materialaustrag.

13. Verfahren nach einem der vorhergehenden Ansprüche, **dadurch gekennzeichnet, dass** die zu einer Fülllinie und/oder Konturlinie ausgetragenen Volumenelemente (110) nach vollständigem Austrag der Fülllinie und/oder Konturlinie erwärmt oder gekühlt werden.

14. Verfahren nach einem der vorhergehenden Ansprüche, **dadurch gekennzeichnet, dass** mittels einer Simulation des Verfahrens eine Morphologieentwicklung des dreidimensionalen Gegenstands (410) aufgrund einer Temperaturentwicklung bestimmt wird.

15. Vorrichtung mit mindestens einer Austragsdüse (210) mindestens einer Austragseinheit (630) sowie mindestens einer Wärmequelle (640) und mindestens einer Wärmesenke (650) in einem Bauraum (610) zur Ausführung des Verfahrens nach einem der Ansprüche 1 bis 14, die dazu eingerichtet ist, zur Erzeugung wenigstens einen dreidimensionalen Gegenstand (410) mittels additiver Fertigung durch Austragen von Volumenelementen (110, 120) bestimmter Größe pro Zeiteinheit mindestens eines fluiden verfestigbaren Materials mit einer bestimmten Temperatur an diskreten Positionen im dreidimensionalen Raum zu erzeugen, und dazu konfiguriert ist, in einem Bauraum (610), entsprechend eines Modells des dreidimensionalen Gegenstands (410), Volumenelemente (110) auszutragen.

16. Computerprogrammprodukt mit einem Programmcode, der auf einem Computer lesbaren Medium gespeichert ist, zur Durchführung des Verfahrens nach einem der Ansprüche 1 bis 14 mittels der Vorrichtung nach Anspruch 15.

**Claims**

1. A method for thermal process management, with the support of which at least one three-dimensional article (410) is producible by additive manufacture, by discharging a certain quantity of volume elements (110, 120) per unit time of at least one fluid solidifiable material at a certain temperature using at least one discharge nozzle (210) of at least one discharge unit (630) of a device that is controllable by the method, for producing the at least one three-dimensional article (410) at discrete positions in a construction chamber (610) according to a previously established model of the three-dimensional article (410), wherein the model of the three-dimensional article (410) is part of a computer-implemented machine code that defines the discrete positions of the volume elements (110) to be discharged and boundary conditions for their discharge, and wherein for each discrete position in three-dimensional space the temperature of the volume element (110) is calculated, taking into account the thermal energies that are input into and removed from the construction chamber (610) by at least one heat source (640) and at least one heat sink (650) respectively and released in the construction chamber (610) by heat losses,
**characterised in that**
the method comprises the following steps:

- determining whether the calculated temperature of the current volume element (110) at the current point in time and at the current discrete position is within a material-specific interval,
- determining whether the calculated temperatures of the adjoining volume elements (120, 150) over an observed time interval from a previous to the current point in time are below a material-specific upper limit for temperature,
- if the calculated temperature at the location of the current volume element (110) is within the material-specific interval and the temperatures of the adjoining volume elements (120, 150) over the observed time interval are below the material-specific upper limit for temperature:

  • continuing to determine the temperature of the next volume element (110) at the next discrete position at the next associated discrete point in time,
  • continuing to determine the temperatures of the adjoining volume elements (120, 150) until the next associated discrete point in time,

- if the calculated temperature at the location of the current volume element (110) is outside the material-specific interval or the temperatures of the adjoining volume elements (120, 150) over the observed time interval are above the material-specific upper limit for temperature:

  • adapting the machine code and the boundary conditions for an increase and decrease in temperature, at least at the current discrete position,
  • continuing to re-determine the temperature of the current volume element (110) at the current discrete position,
  • continuing to re-determine the temperatures of the adjoining volume elements (120, 150),

wherein the steps for at least part of the model of the three-dimensional article (410) are performed.

2. A method according to Claim 1, **characterised in that**, for the purpose of calculating the temperature of the volume element (110), for each discrete position in three-dimensional space there are taken into account the thermal energies acting on the volume element (110), which are input into and discharged from the construction chamber by the at least one discharge nozzle (210) of the at least one discharge unit (630) and/or at least one heat source (640) and heat sink (650) arranged in the construction chamber (610) at the at least one discharge nozzle (210), and the thermal energies that are released into the construction chamber (610) from the volume element (110) at at least directly adjoining volume elements (120) and to the ambient area as thermal radiation and free convection.

3. A method according to one of Claims 1 or 2, **characterised in that** the thermal energies which are relevant to calculation of the temperature of volume elements (110, 120) for each discrete position in the three-dimensional space and are input into and discharged from the construction chamber (610) by at least one heat source (640) and at least one heat sink (650), and are released in the construction chamber (510) as a result of heat losses, are considered in a differential equation within the machine code, wherein parts of the differential equation may be linearised for its solution.

4. A method according to one of the preceding claims, **characterised in that** in addition, for at least one directly adjacent discrete position and/or for at least one other discrete position, the temperature of the volume element (120) is calculated again, and **in that** on the basis of this the machine code and/or the boundary conditions for raising and lowering temperature are adapted for at least this discrete position.

5. A method according to one of the preceding claims, **characterised in that**, if the calculated temperature of any point on the already discharged surface is above a defined temperature limit at some point in time, a certain number of calculation steps before this point in time is gone back and adaptations are made to the machine code and/or the boundary conditions for raising and lowering temperature, at least during the newly calculated time interval.

6. A method according to one of the preceding claims, **characterised in that** from commands of the machine code, a relative trajectory of the at least one discharge nozzle (210) and where applicable at least one heat source (640) and heat sink (650) additionally arranged at the at least one discharge nozzle (210) in relation to the surface of a preferably temperature-controllable support (620) that supports the three-dimensional article (410) that is to be manufactured and/or in relation to the three-dimensional article (410) is determined.

7. A method according to one of the preceding claims, **characterised by** predictively calculating the temperature of the volume element (110) for each discrete position of the at least part of the model and influencing the at least one heat source (640) and the at least one heat sink (650) by adapting the machine code and the boundary conditions for raising and lowering temperature.

8. A method according to one of the preceding claims, **characterised in that** adapting the boundary conditions comprises at least one of or a combination of the following measures:

   - changing the process speed,
   - controlling the output of radiation from the at least one heat source (640),
   - controlling the at least one heat sink (650),
   - controlling the temperature of the support (620),
   - inserting additional travel commands or likewise idle commands,
   - changing the order of the discrete positions at which volume elements (110, 120) are successively discharged,
   - changing the nature of fill lines and/or contour lines.

9. A method according to one of the preceding claims, **characterised in that**, for the purpose of lowering the temperature of the volume element (110) and/or adjoining volume elements (120) at the discrete position, an additional forced convection is caused, for the generation of which for example at least one fan and/or at least one controllable heat sink (640) is used.

10. A method according to one of the preceding claims, **characterised in that** at least two materials of different specifics are used as fluid solidifiable materials, wherein when using the at least two materials, if they do not allow the same necessary construction chamber temperature,

   at a construction chamber temperature that is adjusted to the lower of the two temperatures the temperature of the volume element (110) that requires the higher fusion temperature is raised or lowered for its application, and/or
   at a construction chamber temperature that is adjusted to the higher of the two temperatures the temperature of the volume element (110) that requires the lower fusion temperature is lowered or raised for its application.

**11.** A method according to Claim 9 or 10, **characterised in that** when using high-temperature materials such as PEI, PSU, PPSU, PEEK, PEAK, PEK or PPS, for which the required construction chamber temperature cannot be achieved, the temperature of the volume element (110) is raised for its application.

**12.** A method according to one of the preceding claims, **characterised in that** in the case of a support (620) that supports the three-dimensional article (410) to be manufactured, or of the three-dimensional article (410), the surface thereof which is to be provided with volume elements (110) is heated or cooled not only during material discharge but also without material discharge.

**13.** A method according to one of the preceding claims, **characterised in that** the volume elements (110) that have been discharged to form a fill line and/or contour line are heated or cooled once the fill line and/or contour line have been completely discharged.

**14.** A method according to one of the preceding claims, **characterised in that** a morphological development of the three-dimensional article (410) is determined using a simulation of the method, on the basis of temperature development.

**15.** A device having at least one discharge nozzle (210) of at least one discharge unit (630) and at least one heat source (640) and at least one heat sink (650) in a construction chamber (610) for performing the method according to one of Claims 1 to 14 which is configured for producing at least one three-dimensional article (410) by additive manufacturing, by discharge of a certain quantity of volume elements (110, 120) per unit time of at least one fluid solidifiable material at a certain temperature at discrete positions in three-dimensional space, and is configured to discharge volume elements (110) in a construction chamber (610) according to a model of the three-dimensional article (410).

**16.** A computer program product that is stored with a program code on a computer-readable medium, for performing the method according to one of Claims 1 to 14 using the device according to Claim 15.

**Revendications**

**1.** Procédé de contrôle d'un processus thermique, à l'aide duquel au moins un objet tridimensionnel (140) peut être produit au moyen d'une fabrication additionnelle par application d'éléments de volume (110, 120) de taille déterminée par unité de temps d'au moins un matériau fluide durcissable à une température déterminée au moyen d'au moins une buse d'application (210) d'au moins une unité d'application (630) d'un dispositif pilotable par le procédé, pour la production du ou des objet(s) tridimensionnel(s) (410) à des positions discrètes dans un espace de construction (610) suivant un modèle défini auparavant de l'objet tridimensionnel (410), le modèle de l'objet tridimensionnel (410) étant une partie d'un code machine mis en oeuvre par un ordinateur, qui définit les positions discrètes des éléments de volume (110) à appliquer et les conditions de bord pour leur application, et dans lequel pour chaque position discrète dans l'espace tridimensionnel, la température de l'élément de volume (110) est calculée et avec cela les énergies thermiques, qui sont apportées par au moins une source de chaleur (640) et au moins un dissipateur de chaleur (650) dans l'espace de construction (610) ou en sont retirées et celles perdues lors de pertes de chaleur dans l'espace de construction (610), sont considérées,
**caractérisé en ce que** le procédé comprend les étapes suivantes :

- examiner si la température calculée de l'élément de volume (110) courant au moment courant et à la position discrète courante se situe à l'intérieur d'un intervalle spécifique du matériau,
- examiner si les températures calculées des éléments de volume voisins (120, 150) se situent dans un intervalle de temps considéré allant d'un moment antérieur au moment actuel en dessous d'une limite supérieure de température spécifique du matériau,
- si la température calculée à l'endroit où se trouve l'élément de volume courant (110) à l'intérieur de l'intervalle spécifique du matériau et que les températures des éléments de volume voisins (120, 150) se situent dans l'intervalle de temps considéré en dessous de la limite supérieure de température spécifique du matériau :

  • continuer avec l'examen de la température de l'élément de volume suivant (110) à la position discrète suivante à un intervalle de temps discret associé suivant,
  • continuer avec l'examen de la température des éléments de volumes voisins (120, 150) jusqu'à l'intervalle de temps discret associé suivant,

- si la température calculée à l'endroit où se trouve l'élément de volume courant (110) se situe à l'extérieur de l'intervalle spécifique du matériau ou que les températures des éléments de volume voisins (120, 150) se situent dans l'intervalle de temps considéré au-dessus de la limite supérieure de température spécifique du matériau :

> • adapter le code machine et les conditions de bord à l'augmentation de la température et à la diminution de la température au moins à la position discrète courante,
> • continuer avec le nouvel examen de la température de l'élément de volume (110) courant à la position discrète courante,
> • continuer avec le nouvel examen des températures des éléments de volume voisins (120, 150),

les étapes étant effectuées pour au moins une partie du modèle de l'objet tridimensionnel (410).

2. Procédé selon la revendication 1, **caractérisé en ce que** pour chaque position discrète dans l'espace tridimensionnel pour le calcul de la température de l'élément de volume (110), les énergies thermiques, celles qui sont appliquées et retirées dans l'espace de construction par la ou les buse(s) d'application (210) de la ou des unité(s) d'application (630) et/ou par au moins une source de chaleur (640) et le dissipateur de chaleur (650) disposés dans l'espace de construction (610) au niveau de la ou des buse(s) d'application (210) et celles qui agissent sur l'élément de volume (110) et les énergies thermiques qui sont retirées dans l'espace de construction (610) par l'élément de volume (110) au niveau au moins des éléments de volume voisins (120) ainsi que le rayonnement thermique et la convection libre vers l'environnement, sont considérés.

3. Procédé selon l'une des revendications 1 et 2, **caractérisé en ce que** les énergies thermiques, qui sont importantes pour le calcul de la température des éléments de volume (110, 120) pour chaque position discrète dans l'espace tridimensionnel et celles qui sont appliquées et retirées par au moins une source de chaleur (640) et au moins un dissipateur de chaleur (650) dans l'espace de construction (610) et celles perdues lors les pertes de chaleur dans l'espace de construction (610), sont introduites dans une équation différentielle à l'intérieur du code machine, des parties de l'équation différentielle pouvant être linéarisées pour sa résolution.

4. Procédé selon l'une des revendications précédentes, **caractérisé en ce qu'**en outre, pour au moins une position discrète directement voisine et/ou pour au moins une autre position discrète, la température de l'élément de volume (120) est à nouveau calculée, et **en ce que** sur la base de ce calcul, le code machine et/ou les conditions de bord sont adaptées à l'augmentation de température et à la diminution de température pour au moins cette position discrète.

5. Procédé selon l'une des revendications précédentes, **caractérisé en ce que** si la température calculée de n'importe quel point sur la surface déjà appliquée se trouve à un moment au-dessus d'une limite de température définie, un choix déterminé d'étapes de calcul sont reprises à partir de ce point et des adaptations du code machine et/ou des conditions de bord à l'augmentation de température et à la diminution de température sont entreprises au moins dans l'intervalle de temps nouvellement calculé.

6. Procédé selon l'une des revendications précédentes, **caractérisé en ce que** sur ordre du code machine, une trajectoire relative de la ou des buses d'application (210) et, le cas échéant, d'au moins une source de chaleur (640) et du dissipateur de chaleur (650) disposés au niveau de la ou des buses d'application (210), est déterminée en relation avec la surface d'un support (620) de préférence à température réglable portant l'objet tridimensionnel (410) à fabriquer ou de l'objet tridimensionnel (410).

7. Procédé selon l'une des revendications précédentes, **caractérisé par** un calcul anticipé de la température de l'élément de volume (110) pour chaque position discrète d'une partie au moins du modèle et par l'influence de la ou des source(s) de chaleur (640) ou du dissipateur de chaleur (650) par adaptation du code machine et des conditions de bord à l'augmentation de température et à la diminution de température.

8. Procédé selon l'une des revendications précédentes, **caractérisé en ce que** l'adaptation des mesures de bord comprend au moins une ou une combinaison des mesures suivantes :

> - modification de la vitesse du processus,
> - pilotage de la puissance rayonnée par la ou les sources de chaleur (640),
> - pilotage du ou des dissipateur(s) de chaleur (650),
> - réglage de la température du support (620),

- ajout d'ordres de procédé supplémentaire ou également d'ordres d'attente,
- modification de l'ordre des positions discrètes, sur lesquelles des éléments de volume sont appliqués les uns après les autres,
- modification de la structure des lignes de remplissage et/ou des contours.

9. Procédé selon l'une des revendications précédentes, **caractérisé en ce que** pour la diminution de la température de l'élément de volume (110) et/ou des éléments de volume voisins (120) sur les positions discrètes, une convection supplémentaire forcée est provoquée, pour la production de laquelle par exemple au moins un ventilateur et/ou au moins un dissipateur de chaleur pilotable (640) est utilisé.

10. Procédé selon l'une des revendications précédentes, **caractérisé en ce qu'**au moins deux matériaux ayant des spécificités différentes sont utilisés en tant que matériaux fluides durcissables, dans lequel, lors de l'utilisation des deux ou plus matériaux, au cas ils ne supportent pas la même température d'espace de construction nécessaire,

à la température d'espace de construction réglée à la plus basse des deux températures, la température de l'élément de volume (110) qui nécessite la température de fusion la plus élevée est augmentée ou réduite pour son application, et/ou

à la température d'espace de construction réglée à la plus haute des deux températures, la température de l'élément de volume (100), qui nécessite la température de fusion la plus basse est réduite ou augmentée pour son application.

11. Procédé selon la revendication 9 ou 10, **caractérisé en ce que** lors de l'utilisation de matériaux à température élevée, comme par exemple PEI, PSU, PPSU, PEEK, PAEK, PEK ou PPS, dont la température d'espace de construction nécessaire ne peut pas être atteinte, la température de l'élément de volume (110) est augmentée pour son application.

12. Procédé selon l'une des revendications précédentes, **caractérisé en ce que** la surface à recouvrir d'éléments de volume (110) d'un support (620) portant l'objet tridimensionnel (410) à fabriquer ou de l'objet tridimensionnel (410) est chauffée ou refroidie non seulement lors de l'application du matériau mais aussi en l'absence d'application du matériau.

13. Procédé selon l'une des revendications précédentes, **caractérisé en ce que** les éléments de volume (110) appliquée en une ligne pleine et/ou en une ligne de contour sont chauffés ou refroidis après l'application complète de la ligne pleine et/ou de la ligne de contour.

14. Procédé selon l'une des revendications précédentes, **caractérisé en ce qu'**au moyen d'une simulation du procédé, un développement de la morphologie de l'objet tridimensionnel (410) est déterminé sur la base d'un développement de température.

15. Dispositif comportant au moins une buse d'application (210) d'au moins une unité d'application (630) ainsi qu'au moins une source de chaleur (640) et au moins un dissipateur de chaleur (650) dans un espace de construction (610) pour la mise en oeuvre du procédé selon l'une des revendications 1 à 14, qui est équipé pour la production d'au moins un objet tridimensionnel (410) au moyen d'une fabrication supplémentaire par application d'éléments de volume (110, 120) d'une taille déterminée par unité de temps d'au moins un matériau fluide durcissable à une température déterminée sur des positions discrètes dans l'espace tridimensionnel et est configuré pour appliquer dans une espace de construction (610), en correspondance avec un modèle de l'objet tridimensionnel (410), des éléments de volume (110).

16. Produit avec programme d'ordinateur, comportant un code programme qui est enregistré sur un ordinateur de manière lisible, pour la mise en oeuvre du procédé selon l'une des revendications 1 à 14 à l'aide du dispositif selon la revendication 15.

Fig. 1a

110

130

Fig. 1b

120

140

Fig. 1c

150

160

Fig. 1d

110

120

130

140

Fig. 2

Fig. 3

Fig. 4a

Fig. 4b

410

Fig. 5

520

510    530

Fig. 6

630

620

610

410

Fig. 7

630

650

210

640

610

410

620

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102016120998 A1
- DE 102017107362 A1
- DE 102017107364 A1
- DE 102018127678 A1
- US 10442118 B2
- US 10710353 B2
- WO 2017210490 A1
- WO 2015167896 A1
- US 2018314235 A1
- EP 3960332 A1
- US 2020307174 A1

**In der Beschreibung aufgeführte Nicht-Patentliteratur**

- **VON SCHROEFFER, A ; MACIUGA T. ; STRUE-BIG, K ; LUETH, T.** A HIGH FIDELITY THERMAL MODEL FOR A NOVEL DROPLET-BASED ADDITIVE MANUFACTURING PROCESS FOR POLYMERS. *Proceedings of the ASME 2019, 14th International Manufacturing Science and Engineering Conference MSEC2019,* 10. Juni 2019